# EUROPEAN PATENT SPECIFICATION

(11) **EP 3 554 025 B1**
(45) Date of publication and mention of the grant of the patent: **28.09.2022**
(21) Application number: 17889182.6
(22) Date of filing: 12.10.2017
(51) Int. Cl.: H04L 49/00, G06F 15/76, G06F 9/00

(54) **METHOD FOR FORWARDING PACKET AND PHYSICAL HOST**
VERFAHREN ZUR PAKETWEITERLEITUNG UND PHYSISCHER HOST
PROCÉDÉ DE TRANSMISSION DE PAQUET, ET HÔTE PHYSIQUE

(30) Priority: 27.12.2016 CN 201611228028
(43) Date of publication of application: 16.10.2019
(73) Proprietor: Huawei Technologies Co., Ltd., Longgang District Shenzhen, Guangdong 518129 (CN)
(72) Inventor: GUO, Feng, Shenzhen Guangdong 518129 (CN); LIN, Haifeng, Shenzhen Guangdong 518129 (CN); ZHANG, Haibo, Shenzhen Guangdong 518129 (CN)
(74) Representative: Goddar, Heinz J.
(86) International application number: PCT/CN2017/105823
(87) International publication number: WO 2018/120986

(56) References cited:
- WO-A1-2015/121750
- WO-A2-2007/075258
- CN-A- 102 004 675
- CN-A- 106 161 110
- US-A1- 2015 026 681
- BERNAL MAURICIO VASQUEZ ET AL: "Transparent Optimization of Inter-Virtual Network Function Communication in Open vSwitch", 2016 5TH IEEE INTERNATIONAL CONFERENCE ON CLOUD NETWORKING (CLOUDNET), IEEE, 3 October 2016 (2016-10-03), pages 76-82, XP033019062, DOI: 10.1109/CLOUDNET.2016.26 [retrieved on 2016-12-06]
- NAKAJIMA YOSHIHIRO ET AL: "High-Performance vNIC Framework for Hypervisor-Based NFV with Userspace vSwitch", 2015 FOURTH EUROPEAN WORKSHOP ON SOFTWARE DEFINED NETWORKS, IEEE, 30 September 2015 (2015-09-30), pages 43-48, XP032804727, DOI: 10.1109/EWSDN.2015.59 [retrieved on 2015-10-30]
- YI REN ET AL: "Shared-Memory Optimizations for Inter-Virtual-Machine Communication", ACM COMPUTING SURVEYS, ACM, NEW YORK, NY, US, US, vol. 48, no. 4, 9 February 2016 (2016-02-09), pages 1-42, XP058079331, ISSN: 0360-0300, DOI: 10.1145/2847562

## Description

This application claims priority to Chinese Patent Application No. 201611228028.6, filed with the Chinese Patent Office on December 27, 2016 and entitled "PACKET FORWARDING METHOD AND PHYSICAL HOST".

### TECHNICAL FIELD

Embodiments of the present invention relate to the communications field, and more specifically, to a packet forwarding method and a physical host.

### BACKGROUND

Network Functions Virtualization (Network Functions Virtualization, NFV), proposed by a telecommunication network operator, is a technical standard that uses a virtualization technology of an information technology (Information Technology, IT) and an industry-standard large-capacity server, memory, and switch to carry various network software functions.

A plurality of virtual machines (Virtual machine, VM) may run simultaneously on a physical server by using the virtualization technology. These VMs need to share a physical network interface card to communicate with an external resource. In addition, the VMs need to communicate with each other. Therefore, a virtual switch (Virtual switch, Vswtich) is added to a virtual machine monitor (Virtual Machine Monitor, VMM) to resolve the foregoing problem. To improve performance of the Vswtich, a user mode Vswtich is introduced in the industry, and a Data Plane Development Kit (Data Plane Development Kit, DPDK) is used to receive/transmit a network packet from/to the physical network interface card.

In the prior art, an Ivshmem solution may enable a host machine (Host) and all VMs to share a same memory storage area by configuring a virtual operating system emulator (QEMU) command. Because the host and the VM on the host share memory, a memory pool (mbufpool) may be established in the shared memory area. The memory pool may have a plurality of memory blocks (mbuf). Both the VM and a physical network interface card of the host may use the memory block of the shared memory area to receive and transmit a packet. Because the mbuf exists in the shared memory area, the host may directly transmit a network packet received by the physical network interface card to the VM, without copying content of the network packet.

However, when the host shares the memory to all the VMs, the host and all the VMs can read and write the shared memory area, and mbuf information established in the shared memory can be rewritten by all the virtual machines. This may cause a disastrous consequence for a system. Consequently, system reliability is reduced.

US 2015/026681 A1 discloses a virtual switching method, a related apparatus, and a computer system. The method includes receiving a first message sent by a source node, where the first message is used to request a first virtual machine to perform switching processing on to-be-switched data, where the to-be-switched data is sent from the source node to a target node and at least one of the source node and the target node is a second virtual machine; and determining a second message according to an address of the target node contained in the to-be-switched data and a configured port mapping table, and sending the second message, where the second message is used to instruct the target node to acquire the to-be-switched data from a storage device of a hardware layer.

WO 2015/121750 A1 discloses a method for data communication using shared memory between virtual interfaces in a virtualized environment, the virtualized environment comprising first and second virtual interfaces associated with one or several virtual nodes. The method comprises: allocating in the memory a shared memory space of the virtualized environment, assigning in the shared memory space a sub-space associated with the second virtual interface for data communication, upon receipt at the first virtual interface of data to be communicated to the second virtual interface, storing the data in the sub- space of the shared memory space associated with the second virtual interface, and extracting the data from the sub-space of the shared memory space for processing by the second virtual interface.

### SUMMARY

The present invention provides a packet forwarding method according to claim 1 and a physical host of claim 11, so as to improve system reliability.

The invention is defined by the appended claims.

According to a first aspect, a packet forwarding method is provided. The method is applied to a physical host, and the physical host includes:
a first virtual switch and at least two virtual machines; each virtual machine in the at least two virtual machines has a shared memory area that can be jointly accessed by the physical host, each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines; and
the method includes:
   obtaining, by the first virtual switch, a first memory block that stores a first packet, where the first memory block carries an index field that is used to identify a virtual machine to which the first memory block belongs; and
   forwarding, by the first virtual switch, the first packet according to the index field of the first memory block.

The physical host separately establishes shared memory areas with the at least two virtual machines, and the shared memory areas are isolated from each other. This eliminates a possibility that a network packet stored in the shared memory area is modified by another virtual machine, so that system reliability can be improved.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

The memory block in each first memory pool includes a first memory segment and a second memory segment, the first memory segment is in front of the second memory segment, the first memory segment is configured to store address information of the second memory segment, and the second memory segment is configured to store a packet; the physical host has at least two second memory pools, each second memory pool in the at least two second memory pools is in a one-to-one correspondence with each first memory pool, and each second memory pool has a first memory segment in a corresponding first memory pool; and
the forwarding, by the first virtual switch, the first packet according to the index field of the first memory block includes:
forwarding, by the first virtual switch, the first packet according to the at least two second memory pools and the index field of the first memory block.

A memory block in the second memory pool includes only a head of the memory block. Therefore, the virtual machine may use a head in the shared memory area to operate the memory block, and the physical host may use the head in the second memory pool to operate the memory block. This resolves a problem that a system exception occurs on the physical host when the physical host operates the memory block because the virtual machine modifies the head of the memory block, so that system reliability is further improved.

The physical host has a physical network interface card receive queue according to the at least two second memory pools, the first virtual machine has a send queue and/or a receive queue, and the receive queue or the send queue of the first virtual machine includes some or all memory blocks in a first memory pool of the first virtual machine; and
the obtaining, by the first virtual switch, a first memory block that stores a first packet includes:
obtaining, by the first virtual switch, the first memory block in the physical network interface card receive queue; or obtaining, by the first virtual switch, the first memory block in the send queue of the first virtual machine.

The first virtual switch is configured to forward a packet to the first virtual machine; and the forwarding, by the first virtual switch, the first packet according to the at least two second memory pools and the index field of the first memory block includes:
if a virtual machine identified by the index field of the first memory block is the first virtual machine, scheduling, by the first virtual switch, a memory block from the first memory pool of the first virtual machine as a second memory block; assigning, by the first virtual switch, address information of the first memory block to the second memory block; and filling, by the first virtual switch, the second memory block into the receive queue of the first virtual machine.

The first virtual switch is configured to forward a packet to the first virtual machine; and the forwarding, by the first virtual switch, the first packet according to the at least two second memory pools and the index field of the first memory block includes:
if a virtual machine identified by the index field of the first memory block is not the first virtual machine, scheduling, by the first virtual switch, a memory block from the at least two second memory pools as a third memory block, where a virtual machine identified by an index field of the third memory block is the first virtual machine; copying, by the first virtual switch, content of the first memory block to the third memory block; scheduling, by the first virtual switch, a memory block from the first memory pool of the first virtual machine as the second memory block; assigning, by the first virtual switch, address information of the third memory block to the second memory block; and filling, by the first virtual switch, the second memory block into the receive queue of the first virtual machine.

The memory block for forwarding the packet is extracted from the second memory pool, and a data area of the second memory pool is not shared and includes head information. This can effectively prevent the head information of the memory block from being damaged by the virtual machine in a packet forwarding process, so as to improve system reliability.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

The first virtual switch is configured to forward the first packet to the physical network interface card receive queue; and the forwarding, by the first virtual switch, the first packet according to the at least two second memory pools and the index field of the first memory block includes:
obtaining, by the first virtual switch, a fourth memory block from the at least two second memory pools, where a virtual machine identified by an index field of the fourth memory block is the first virtual machine; assigning, by the first virtual switch, address information of the first memory block to the fourth memory block; and filling, by the first virtual switch, the fourth memory block into the physical network interface card receive queue.

The memory block for forwarding the packet is extracted from the second memory pool, and a data area of the second memory pool is not shared and includes head information. This can effectively prevent the head information of the memory block from being damaged by the virtual machine in a packet forwarding process, so as to improve system reliability.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

According to a second aspect, an embodiment of the present invention provides a physical host. The physical host includes:
a first virtual switch and at least two virtual machines; each virtual machine in the at least two virtual machines has a shared memory area that can be jointly accessed by the physical host, each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines; and
the first virtual switch is configured to obtain a first memory block that stores a first packet, where the first memory block carries an index field that is used to identify a virtual machine to which the first memory block belongs; and the first virtual switch is further configured to forward the first packet according to the index field of the first memory block.

The memory block in each first memory pool includes a first memory segment and a second memory segment, the first memory segment is in front of the second memory segment, the first memory segment is configured to store address information of the second memory segment, and the second memory segment is configured to store a packet; the physical host has at least two second memory pools, each second memory pool in the at least two second memory pools is in a one-to-one correspondence with each first memory pool, and each second memory pool has a first memory segment in a corresponding first memory pool; and
the first virtual switch is specifically configured to forward the first packet according to the at least two second memory pools and the index field of the first memory block.

The physical host has a physical network interface card receive queue according to the at least two second memory pools, the first virtual machine has a send queue and/or a receive queue, and the receive queue or the send queue of the first virtual machine includes some or all memory blocks in a first memory pool of the first virtual machine; and
the first virtual switch is specifically configured to obtain the first memory block in the physical network interface card receive queue, or the first virtual switch is specifically configured to obtain the first memory block in the send queue of the first virtual machine.

The virtual switch is configured to forward a packet to the first virtual machine, where if a virtual machine identified by the index field of the first memory block is the first virtual machine, the first virtual switch schedules a memory block from the first memory pool of the first virtual machine as a second memory block; the first virtual switch is configured to assign address information of the first memory block to the second memory block; and the first virtual switch is configured to fill the second memory block into the receive queue of the first virtual machine.

The first virtual switch is configured to forward a packet to the first virtual machine, where if a virtual machine identified by the index field of the first memory block is not the first virtual machine, the first virtual switch schedules a memory block from the at least two second memory pools as a third memory block, where a virtual machine identified by an index field of the third memory block is the first virtual machine; the first virtual switch is configured to copy content of the first memory block to the third memory block; the first virtual switch is configured to schedule a memory block from the first memory pool of the first virtual machine as the second memory block; the first virtual switch is configured to assign address information of the third memory block to the second memory block; and the first virtual switch is configured to fill the second memory block into the receive queue of the first virtual machine.

The first virtual switch is configured to forward the first packet to the physical network interface card receive queue, where the first virtual switch is configured to obtain a fourth memory block from the at least two second memory pools, and a virtual machine identified by an index field of the fourth memory block is the first virtual machine; the first virtual switch is configured to assign address information of the first memory block to the fourth memory block; and the first virtual switch is configured to fill the fourth memory block into the physical network interface card receive queue.

According to a third aspect, a physical host is provided, and the physical host provided in this embodiment of the present invention includes an input device, an output device, a processor, and a memory, where the processor, the memory, and an interface communicate with each other and transmit a control and/or a data signal by using an internal connection channel.

The processor simulates, on the physical host, a first virtual switch and at least two virtual machines by invoking virtual machine software stored in the memory. Each virtual machine in the at least two virtual machines has a shared memory area that can be jointly accessed by the physical host, each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines; and the first virtual switch is configured to:
obtain a first memory block that stores a first packet, where the first memory block carries an index field that is used to identify a virtual machine to which the first memory block belongs; and forward the first packet according to the index field of the first memory block.

With reference to the foregoing aspects, the address information includes information about a data length field and information about a data starting position offset field.

With reference to the foregoing aspects, the physical host has a physical network interface card memory block queue, and the method further includes: filling, by the physical host, the physical network interface card memory block queue according to a memory block in the at least two second memory pools.

With reference to the foregoing aspects, before the filling, by the physical host, the physical network interface card memory block queue according to a memory block in the at least two second memory pools, the method further includes:
with reference to the foregoing aspects, obtaining, by the physical host, traffic statistics information of each virtual machine in the at least two virtual machines; and determining, by the physical host according to the traffic statistics information, a traffic ratio between traffic of each virtual machine in the at least two virtual machines and total traffic of the at least two virtual machines; and the filling, by the physical host, the physical network interface card memory block queue according to a memory block in the at least two second memory pools includes: determining, by the physical host, a traffic ratio of the first virtual machine as a ratio between a quantity of memory blocks corresponding to the first virtual machine filled in the physical network interface card memory block queue and a total quantity of memory blocks filled in the physical network interface card memory block queue.

According to the physical network interface card memory block queue in this embodiment of the present invention, network traffic that enters each virtual machine is monitored, and the ratio between memory blocks that are from the second memory pools and in the physical network interface card memory block queue is dynamically adjusted, so as to resolve a problem of a low matching probability between a memory block that stores a packet and a memory block of a destination virtual machine.

With reference to the foregoing aspects, the physical host generates the first shared memory area by configuring a metadata file for the first virtual machine, and the metadata file includes port information of the first virtual machine and the memory block in the first memory pool of the first virtual machine.

The metadata file includes the port information of the first virtual machine, but does not include port information of another virtual machine. This can effectively prevent the virtual port from damaging important information of another virtual port.

In addition, the metadata file includes the memory block of the first memory pool of the first virtual machine, but does not include a head of the first memory pool of the first virtual machine. This can prevent head management information of the first memory pool from being damaged by a virtual machine, so as to further improve system reliability.

With reference to the foregoing aspects, in a possible design, according to the traffic ratio between the at least two virtual machines, the physical host may further apply for a corresponding quantity of memory blocks from each second memory pool, and put the memory blocks into the physical network interface card memory block queue.

### BRIEF DESCRIPTION OF DRAWINGS

FIG. 1 is a schematic block diagram of a virtual machine architecture according to an embodiment of the present invention;
FIG. 2 is a schematic structural diagram of a memory block according to an embodiment of the present invention;
FIG. 3 is a schematic block diagram of a principle of a packet forwarding apparatus in the prior art;
FIG. 4 is a schematic block diagram of an internal structure of a physical host for forwarding a packet according to an embodiment of the present invention;
FIG. 5 is a schematic structural block diagram of a second memory pool corresponding to a first shared memory area according to an embodiment of the present invention;
FIG. 6 is a schematic structural diagram of a physical network interface card receive queue according to an embodiment of the present invention;
FIG. 7 is a schematic structural block diagram of a shared memory area and a second memory pool according to an embodiment of the present invention;
FIG. 8 is a schematic flowchart of a method for forwarding a packet to a first virtual machine by a first virtual switch according to an embodiment of the present invention;
FIG. 9 is a schematic flowchart of a method for forwarding a packet to a physical network interface card receive queue by a first virtual switch according to an embodiment of the present invention; and
FIG. 10 is a schematic block diagram of a physical host according to an embodiment of the present invention.

### DESCRIPTION OF EMBODIMENTS

A method and a physical host that are provided in the embodiments of the present invention may be applied to a virtual machine architecture including a plurality of operating systems. For example, the method and the physical host may be applied to a virtual machine architecture including one or more operating systems of Linux, Windows, Unix, or the like. The virtual machine architecture may further include other operating systems, and this is not limited in the embodiments of the present invention.

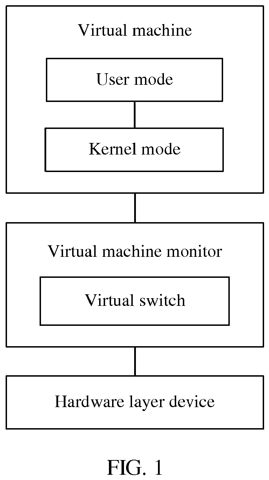

For ease of understanding, with reference to FIG. 1 to FIG. 3, an architecture of a communications system applicable to a packet forwarding method according to an embodiment of the present invention and a function of each device in the communications system are first described.

FIG. 1 is a schematic block diagram of a virtual machine architecture according to an embodiment of the present invention.

As shown in FIG. 1, a virtual machine includes a user mode and a kernel mode, which are two operating levels of an operating system. A user delivers various instructions in the user mode, and the instructions delivered by the user are generated in the user mode of the virtual machine and delivered to the kernel mode of the virtual machine.

A virtual machine monitor (Virtual Machine Monitor, VMM) is communicatively connected to the virtual machine. The VMM may also be referred to as a Hypervisor, and is configured to manage the foregoing one or more virtual machines. The VMM in this embodiment of the present invention is an intermediate software layer running between a physical server and an operating system, and the VMM may allow a plurality of operating systems and applications to share one set of basic physical hardware. Therefore, the VMM may also be considered as a "meta" operating system in a virtual circumstance, and the VMM may coordinate accesses to all hardware layer devices and virtual machines on a server. A basic function of the VMM is uninterruptedly supporting migration of multiple workloads. When the server is started and runs the VMM, the server allocates a proper quantity of memory, CPUs, networks, and disks to each virtual machine, and loads guest operating systems of all the virtual machines.

Related functions of memory allocation in the C language mainly include alloc, calloc, malloc, free, realloc, sbrk, and the like. Memory applied for by using alloc does not need to be released.

It should be understood that the virtual machine architecture (or system) may include one or more virtual machines. These virtual machines need to share a physical network interface card to communicate with an external resource. In addition, the virtual machines need to communicate with each other. Therefore, a virtual switch may be added to the Hypervisor to resolve the foregoing problem. To further improve performance of the virtual switch, a user mode virtual switch (Vswtich) is introduced in the industry, and application software based on a Data Plane Development Kit (Data Plane Development Kit, DPDK) receives/transmits a network packet from/to an mbuf of the physical network interface card according to a data structure of the mbuf.

It should be noted that in a virtual switching environment, the physical network interface card is held by a host machine (Host), and the virtual machine needs to use the physical network interface card to perform external network interaction by using the host. However, in a virtualization environment, memory space of one virtual machine is isolated from memory space of another virtual machine, and memory space of the virtual machines is isolated from memory space of the host. Therefore, a network packet needs to be transferred between the virtual machine and the host by using a special means.

The physical network interface card is also referred to as a network adapter (Network Interface Card, NIC).

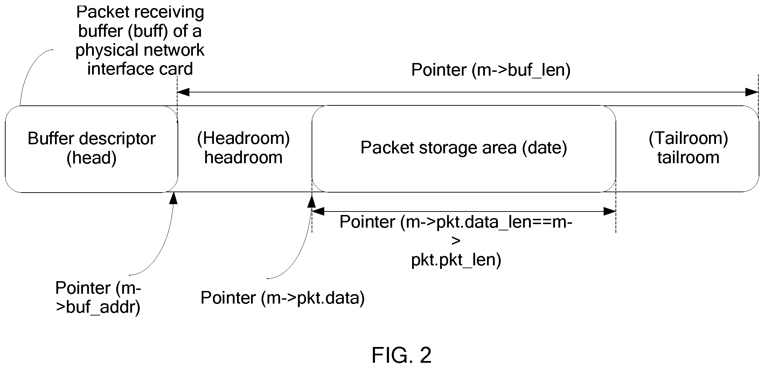

FIG. 2 shows a schematic structural diagram of a memory block according to an embodiment of the present invention.

As shown in FIG. 2, a data structure of the mbuf is divided into a first memory segment, configured to store address information of a second memory block segment that is in the memory block and that is configured to store a packet. The first memory segment may also be referred to as a head (head) of the memory block, and the second memory segment may also be referred to as a packet storage part (data). The address information in the head may indicate an mbuf address of the packet by using an m->buf_addr instruction, indicate an mbuf length of the packet by using m->buf_len, point to a storage area of the packet by using a pointer m->pkt.data, and indicate an actual length of the packet by using m->pkt.data_len= =m->pkt.pkt_len. Headroom (headroom) and tailroom (tailroom) are separately reserved before and after the second memory segment, so as to facilitate an application in decapsulating the packet.

It should be understood that the mbuf is managed by a memory pool (rte_mempool), and the rte_mempool applies for a plurality of mbufs at one time during initialization. A quantity and a length of applied mbufs may be specified by a user. The rte_mempool may be created by using a function rte_mempool_create(). A process of creating the rte_mempool specifically includes:
(1) Calculate memory space that needs to be applied for the rte_mempool.
(2) Take out memory with a proper size from system memory by using a function rte_config.mem_config->free_memseg[], and record the memory in the memory pool (rte_config.mem_config->memzone[]).
(3) Initialize the newly created rte_mempool, and invoke a function rte_pktmbuf_pool_init() to initialize a private data structure of the rte_mempool.
(4) Invoke a function mempool_populate() and a function rte_pktmbuf_init() to initialize each mbuf of the rte_mempool.

It should be understood that the applied rte_mempool may include: a headmost memory pool data structure (struct rte_mempool), the private data structure (rte_pktmbuf_pool_private), and an allocated memory block (mbuf). The rte_pktmbuf_pool_private may also be referred to as a head of the memory pool.

Application software based on a DPDK or a user mode virtual switch accesses network packet content stored in the data by holding the head of the mbuf.

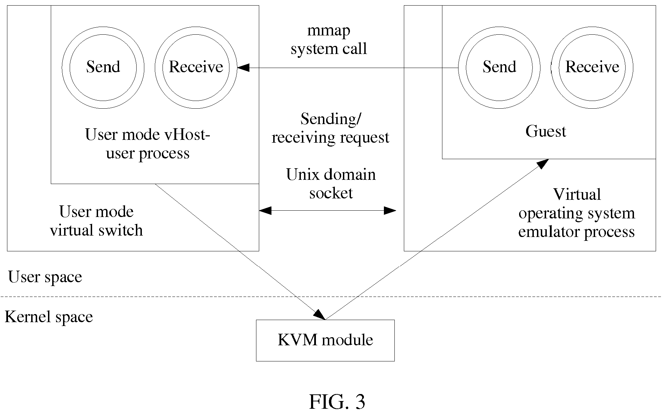

FIG. 3 shows a schematic block diagram of a packet forwarding apparatus in the prior art.

As shown in FIG. 3, a user mode virtual host management system (vHost-user) solution mainly includes three parts: a user mode vHost-user process, a vHost-user module of a QEMU process, and a front-end driver (virtio-net) of a guest operating system (Guest OS). The user mode vHost-user process is configured to receive a packet from a network interface card of the Guest OS or send a packet to a network interface card of the Guest OS. The vHost-user module of the QEMU process is configured to establish a message channel between the Guest OS and the user mode vHost-user process. The virtio-net network interface card of the Guest OS is configured to provide a uniform user mode network communications interface, so that a user may receive and send a packet through the interface.

If the Guest OS uses a kernel mode driver, a notification part of a multi-computer switcher (KVM) module of a kernel needs to be further included. If the Guest OS uses a user mode poll mode driver (Poll Mode Drivers, PMD), the notification part is not needed.

A basic process of initializing the apparatus includes:
(1) Start the user mode vHost-user process, initialize a socket (socket) of a server, and monitor a QEMU socket event of a client.
(2) Start the QEMU process, connect to the user mode vHost-user process, and deliver Guest OS memory information to the user mode vHost-user process by using a memory mapping (mmap). The user mode vHost-user process maps the received memory information to address space of the user mode vHost-user process by using the memory mapping, and obtains read/write permission of Guest OS memory, so that the user mode vHost-user process can be authorized to access the Guest OS memory information.

A mmap system call may map all or some content of a disk file to user space, and a file read/write operation performed by a process becomes a memory read/write operation, so that a more useful dynamic memory allocation function is implemented.

(3) Start the Guest OS, load a virtio-net network interface card driver, deliver virtio-net network interface card receive/send queue information to the user mode vHost-user process, and negotiate a network interface card feature with the user mode vHost-user process. After receiving the virtio-net network interface card receive/send queue information, the user mode vHost-user process converts the virtio-net network interface card receive/send queue information into an address of the user mode vHost-user process, so as to access and operate a virtio-net network interface card receive/send queue.

In a VM packet receiving process, during initialization of the virtio-net network interface card, memory may be filled in a virtio-net network interface card receive queue (for example, a vring queue). The user mode vHost-user process receives a packet from a physical network interface card or a virtual network interface card, stores the packet in allocated memory, then obtains an available memory address of the virtio-net network interface card receive queue, and copy the packet to the virtio-net network interface card receive queue.

In a VM packet sending process, after generating a packet, a user mode process of the Guest OS fills the packet into a send queue (for example, a vring queue) by using a sending interface of the virtio-net network interface card. When polling a new packet in the send queue, the user mode vHost-user process allocates memory, copies the new packet in the send queue to memory of the user mode vHost-user process, processes the packet, and sends the packet to the physical network interface card or a virtual port.

Because a VM does not have permission to access host memory in a virtualization environment, the host may access memory in a vring queue of a virtio network interface card of the VM. However, the host memory is used as a buffer for the physical network interface card to receive a network packet outside the host.

Therefore, after the network packet is switched by using a Vswtich, the host needs to copy content of the network packet to the memory of the vring of the VM, so that the VM can process the network packet. Because the packet content of the network packet needs to be copied before the network packet enters the virtual machine, a central processing unit (Central Processing Unit, CPU) of the host is consumed heavily, thereby significantly affecting forwarding performance of the Vswtich.

Therefore, by using an Ivshmem mechanism of the QEMU, a DPDK program provides a quick (Host to guest and guest to Host) zero data copy shared solution for the virtual machine. Specifically, in an Ivshmem solution, one or more physical huge pages are mapped to an Ivshmem device by configuring a QEMU command. The Ivshmem device is mapped to the virtual machine by the QEMU as a PCI storage device. The Ivshmem may enable the host and all the VMs to share a same memory storage area. Because the VM and the VM on the host share memory, an mbufpool may be established in the shared memory area, and both the VM and the physical network interface card of the host may use an mbuf of the shared memory area to receive and transmit a packet. Because the mbuf exists in the shared memory area, the host may directly transmit a network packet received by the physical network interface card to the VM, without copying content of the network packet. Similarly, the Vswtich may directly forward a network packet sent by one VM to another VM, without copying content of the packet.

In the Ivshmem solution, when the network packet is received from the physical network interface card and gets in and out of the VM, it is unnecessary to copy the packet memory. Therefore, CPU consumption can be greatly reduced, and forwarding performance of the vS witch is improved.

However, because the host can share the memory to all the VMs, the host and all the VMs can read and write the shared memory area, and mbuf information established in the shared memory can be rewritten by all the virtual machines. This may cause a disastrous consequence for a system. Consequently, system reliability is reduced.

For example, a VM program exception causes pointer information of a head in the shared memory area to be rewritten, for example, m->pkt.data is rewritten to NULL. When the host or another VM accesses the pointer, a program exception occurs on the host or the VM.

For another example, when a VM processes a network packet stored in a data area, another VM rewrites length information of an IP header due to a program exception, and if the VM uses abnormal IP length information, an unpredictable exception is caused, and consequently, the VM is unavailable.

These problems that a single VM program exception causes the host and the another VM to be abnormal are unacceptable in a commercial field. This reduces system reliability.

The embodiments of the present invention provide a high-performance and high-reliability method for transmitting a network packet between a virtual machine and a host, and a physical host, so as to improve system reliability.

The physical host includes at least two virtual machines, each virtual machine in the at least two virtual machines has a shared memory area that can be jointly accessed by the first physical host, each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines.

The physical host separately establishes shared memory areas with the at least two virtual machines, and prohibits another virtual machine from accessing the shared memory area. This eliminates a possibility that a network packet stored in the shared memory area is modified by the another virtual machine, so that system reliability can be improved.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

The memory block in the first memory pool includes a first memory segment and a second memory segment, the first memory segment is in front of the second memory segment, the first memory segment is configured to store address information of the second memory segment, and the second memory segment is configured to store a packet; and the physical host has at least two second memory pools, each second memory pool in the at least two second memory pools is in a one-to-one correspondence with each first memory pool, and each second memory pool has a first memory segment in a corresponding first memory pool. Optionally, the address information includes information about a data length field (date_len) and information about a data starting position offset field (date_off).

Specifically, the index (index) field may be added to a data structure of the memory block to identify the virtual machine to which the memory block belongs. Optionally, in an initialization phase of the memory block in the second memory pool, reassignment is performed on the memory block, so that memory blocks that have a same index and that are in the second memory pool and the first memory pool have a same data structure, that is, each second memory pool has a first memory segment in the corresponding first memory pool.

The memory block in the second memory pool includes only a head of the memory block. Therefore, the virtual machine uses a head in the shared memory area to operate the memory block, and the physical host uses the head in the second memory pool to operate the memory block. This resolves a problem that a system exception occurs on the physical host when the physical host operates the memory block because the virtual machine modifies the head of the memory block, so that system reliability is further improved.

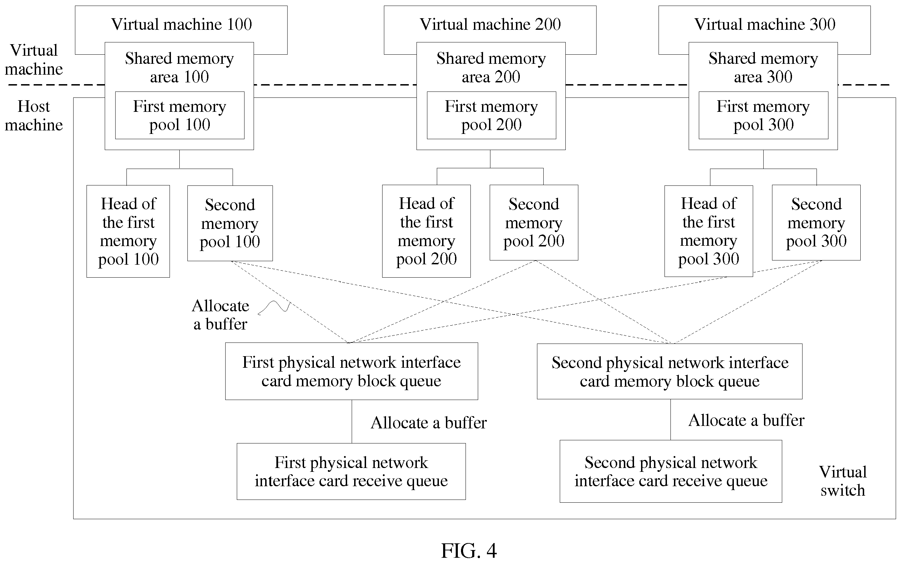

FIG. 4 is a schematic block diagram of an internal structure of a physical host for forwarding a packet according to an embodiment of the present invention.

As shown in FIG. 4, the physical host separately establishes a shared memory area 100, a shared memory area 200, and a shared memory area 300 that can be jointly accessed with a virtual machine (VM) 100, a virtual machine 200, and a virtual machine 300. The shared memory area 100 is prohibited from being accessed by another virtual machine different from the virtual machine 100 in the physical host, the shared memory area 200 is prohibited from being accessed by another virtual machine different from the virtual machine 200 in the physical host, and the shared memory area 300 is prohibited from being accessed by another virtual machine different from the virtual machine 300 in the physical host. A first memory pool (mempool) of an mbuf that is used by a physical network interface card to receive a packet is established in each shared memory area. Each first memory pool includes at least one memory block. The physical host establishes a second memory pool 100, a second memory pool 200, and a second memory pool 300 in a physical memory. The physical host establishes a first physical network interface card memory block queue and a second physical network interface card memory block queue in the physical host according to the second memory pool 100, the second memory pool 200, and the second memory pool 300. In addition, each physical network interface card memory block queue is corresponding to a physical network interface card receive queue (rx queue), and the physical network interface card receive queue invokes a memory block from the corresponding physical network interface card memory block queue.

In this embodiment of the present invention, the first memory pool may also be referred to as a vm mempool, and correspondingly, a head of the first memory pool may be referred to as a vm mempool head. The second memory pool may also be referred to as a host-vm mempool, a head of the second memory pool may also be referred to as a host-vm mempool head, and the memory block may also be referred to as an mbuf. This is not specifically limited in this embodiment of the present invention.

It should be understood that FIG. 4 describes an example of the internal structure of the physical host according to this embodiment of the present invention. This embodiment of the present invention imposes no limitation.

For example, the physical host may have one or more physical network interface card memory block queues, and one or more physical network interface card receive queues.

For another example, the physical host includes one or more virtual machines.

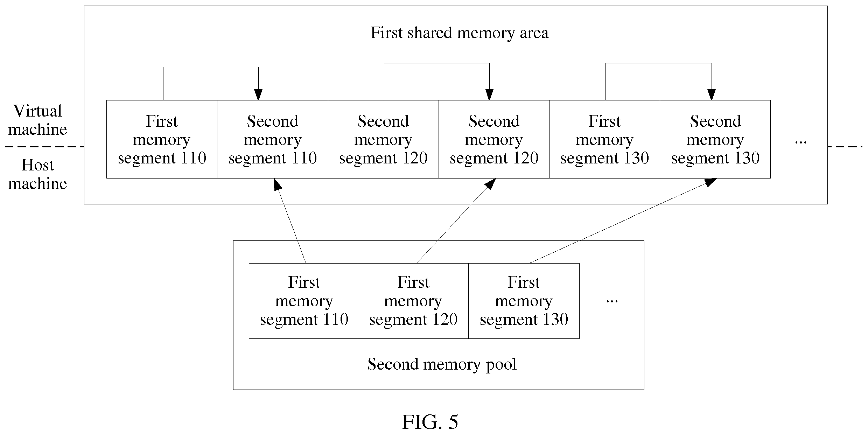

FIG. 5 is a schematic structural block diagram of a second memory pool corresponding to a first shared memory area according to an embodiment of the present invention.

As shown in FIG. 5, a first virtual machine running on a physical host has a first shared memory area, a memory pool in the first shared memory area has a first memory block 110, a first memory block 120, and a first memory block 130, and each memory block includes a first memory segment and a second memory segment. The physical host has the second memory pool, and the second memory pool has a first memory segment of each memory block. First memory segments that have a same index and that are in the second memory pool and the first memory pool are corresponding to a same second memory segment. For example, a first memory segment 110 in the first memory pool and a first memory segment 110 in the second memory pool are corresponding to a second memory segment 110. In this embodiment of the present invention, a memory block in the second memory pool is prohibited from being accessed by a virtual machine on the physical host, and a memory block in the first memory pool may be accessed by the physical host and the first virtual machine.

It should be understood that FIG. 5 describes an example of the first memory pool of the first virtual machine and the second memory pool on the corresponding physical host. This embodiment of the present invention imposes no limitation.

For example, another virtual machine on the physical host may further have a second memory pool.

The physical host fills a physical network interface card memory block queue according to memory blocks in the at least two second memory pools. The physical network interface card memory block queue is used as a queue from which a corresponding physical network interface card receive queue invokes a memory block.

Specifically, when receiving a packet, the physical network interface card memory receive queue stores the packet in a memory block in the physical network interface card receive queue, and directly invokes a memory block from the corresponding physical network interface card memory block queue to fill an empty location of the physical network interface card receive queue.

The physical host obtains traffic statistics information of each virtual machine in the at least two virtual machines; determines, according to the traffic statistics information, a traffic ratio between traffic of each virtual machine in the at least two virtual machines and total traffic of the at least two virtual machines; and determines a traffic ratio of the first virtual machine as a ratio between a quantity of memory blocks corresponding to the first virtual machine filled in the physical network interface card memory block queue and a total quantity of memory blocks filled in the physical network interface card memory block queue.

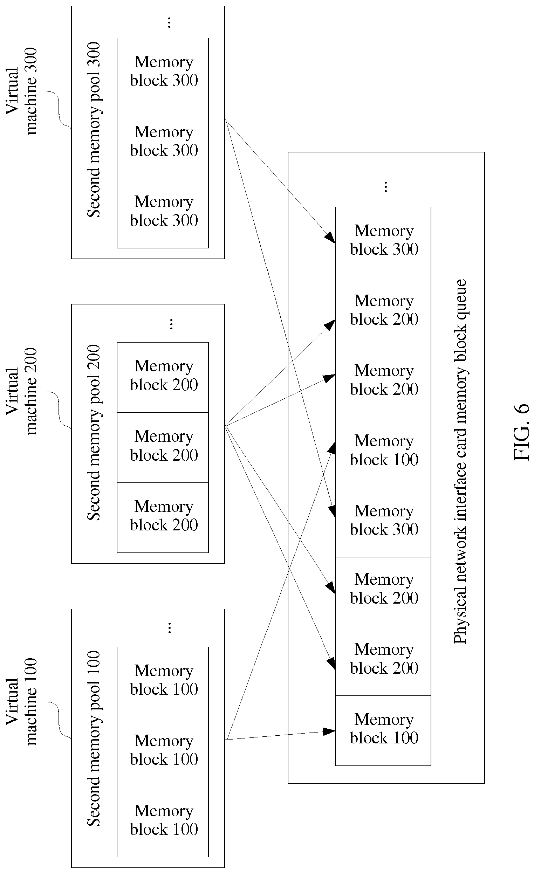

FIG. 6 is a schematic structural diagram of a physical network interface card memory block queue according to an embodiment of the present invention.

As shown in FIG. 6, a memory of a physical host has a second memory pool 100 corresponding to a virtual machine 100, a second memory pool 200 corresponding to a virtual machine 200, and a second memory pool 300 corresponding to a virtual machine 300. The second memory pool 100 has at least one memory block 100, the second memory pool 200 has at least one memory block 200, and the second memory pool 300 has at least one memory block 300. The physical host determines a memory block in the physical network interface card memory block queue according to the at least one memory block 100, the at least one memory block 200, and the at least one memory block 300.

Specifically, as shown in FIG. 6, by means of statistics, the physical host determines that: Traffic of the virtual machine 100 : Traffic of the virtual machine 200 : Traffic of the virtual machine 300 = 0.25:0.5:0.25. Therefore, when the physical host determines to fill the physical network interface card memory block queue, Memory block 100 : Memory block 200 : Memory block 300 = 0.25:0.5:0.25, and memory blocks are extracted from the second memory pool 100, the second memory pool 200, and the third memory pool 300 according to the foregoing ratio and a capacity of the physical network interface card memory block queue.

It should be understood that FIG. 6 describes an example that the physical network interface card memory block queue extracts the memory blocks from the second memory pool 100, the second memory pool 200, and the third memory pool 300. This embodiment of the present invention imposes no limitation.

According to the traffic ratio between the at least two virtual machines, the physical host may further apply for a corresponding quantity of memory blocks from each second memory pool, and put the memory blocks into the physical network interface card memory block queue.

Specifically, the physical host obtains data packet traffic that is received by each virtual machine from a physical network interface card and that is collected periodically, and by using a statistical result, calculates a traffic proportion of each virtual machine or a traffic ratio between the traffic of each virtual machine and total traffic of the at least two virtual machines.

Therefore, according to the physical network interface card memory block queue in this embodiment of the present invention, network traffic that enters each virtual machine is monitored, and the ratio between memory blocks that are from the second memory pools and in the physical network interface card memory block queue is dynamically adjusted, so as to resolve a problem of a low matching probability between a memory block that stores a packet and a memory block of a destination virtual machine.

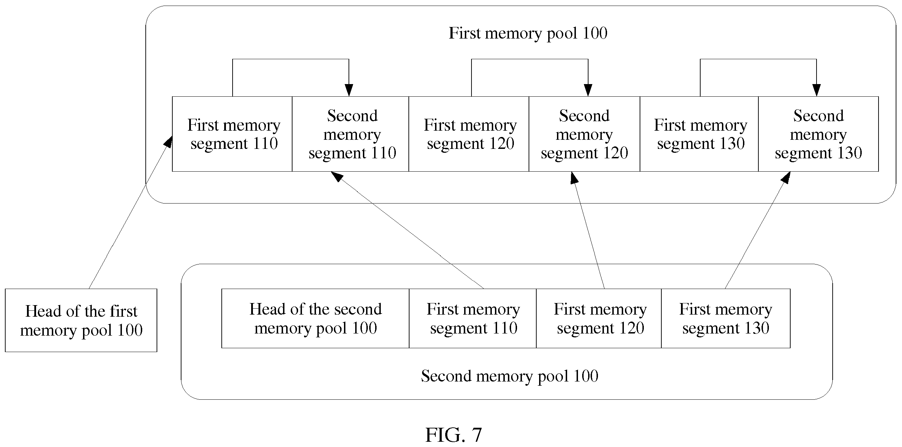

The foregoing describes, with reference to FIG. 1 to FIG. 6, a framework and a configuration of a virtual machine running on the physical host in the embodiments of the present invention. The following describes, in detail with reference to FIG. 7, a specific implementation in which the physical host establishes a shared memory area for each virtual machine.

The physical host generates the first shared memory area by configuring a metadata file for the first virtual machine, and the metadata file includes port information of the first virtual machine and the memory block in the first memory pool of the first virtual machine.

Specifically, the physical host applies for four segments of memory zones (memzone) for each virtual machine, and one segment of memory zone is configured to store virtual port information (vport info). Each virtual machine on the physical host may be corresponding to one virtual port, and the other three segments of memzones are respectively configured to store a head of the first memory pool, the memory block of the first memory pool, and the second memory pool. The head of the first memory pool is configured to store control management information of the first memory pool.

A memzone that needs to be shared is added to the metadata (metadata) file and shared with the specified virtual machine by using a QEMU program.

For example, when creating a virtual port for the first virtual machine, the physical host adds the memzone that is configured to store the memory block of the first memory pool of the first virtual machine and the memzone that is configured to store vport info of the first virtual machine to the metadata file.

Only the memzone that is configured to store the vport info of the first virtual machine is added to the metadata file, and a memzone that is configured to store other vport info is not added to the metadata file. This can effectively prevent the virtual port from damaging important information of another virtual port.

In addition, only the memzone that is configured to store the memory block of the first memory pool of the first virtual machine is added to the metadata file, and the memzone that is configured to store the head of the first memory pool of the first virtual machine is not added to the metadata file. This can prevent head management information of the first memory pool from being damaged by a virtual machine, so as to further improve system reliability.

FIG. 7 is a schematic structural block diagram of a shared memory area and a second memory pool according to an embodiment of the present invention.

Specifically, as shown in FIG. 7, a first memory pool 100 of a virtual machine 100 includes one or more memory blocks, and each memory block includes a first memory segment and a second memory segment. A head and the memory block that are of the first memory pool 100 are separately stored. A physical host has a second memory pool 100 corresponding to the virtual machine 100. The second memory pool 100 includes only the first memory segment of the memory block in the first memory pool 100. When creating the shared memory area for the virtual machine 100, the physical host adds only a memzone that is configured to store the memory block of the first memory pool 100 and a memzone that is configured to store the head of the first memory pool 100 to a metadata file.

It should be understood that FIG. 7 describes an example of a method for establishing the shared memory area for a first virtual machine by the physical host. This embodiment of the present invention imposes no limitation.

For example, the physical host may further establish a shared memory area for another virtual machine by using the foregoing method.

Therefore, in this embodiment of the present invention, the physical host separately establishes the shared memory area for the virtual machine running on the physical host, and prohibits another virtual machine from accessing the shared memory area. This eliminates a possibility that a network packet stored in the shared memory area is modified by the another virtual machine, so that system reliability can be improved.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

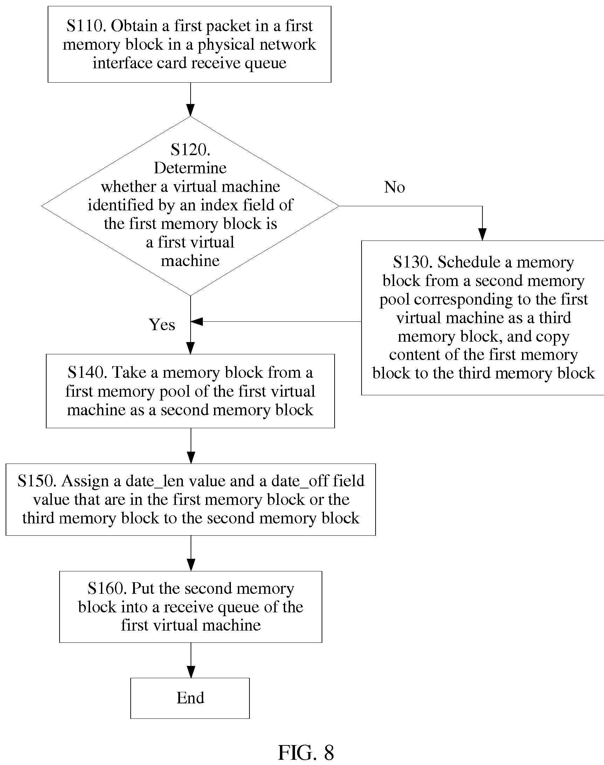

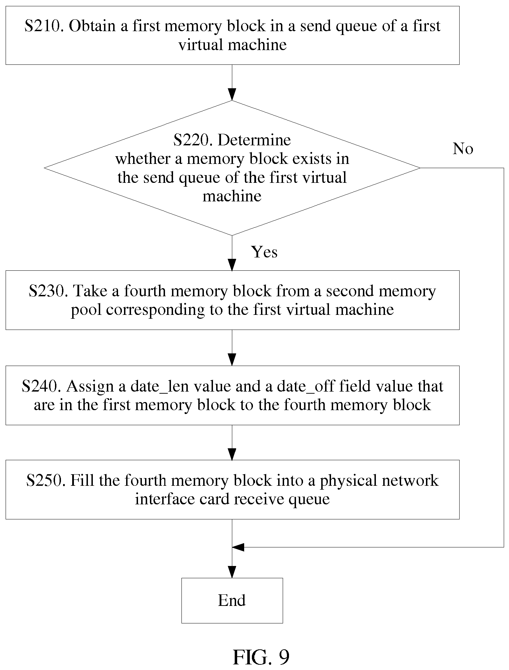

The following describes in detail a packet forwarding method based on the foregoing configured physical host and virtual machine with reference to FIG. 8 and FIG. 9.

A first virtual switch of at least one virtual switch configured on the physical host obtains a first memory block that stores a first packet, where the first memory block carries an index field that is used to identify a virtual machine to which the first memory block belongs; and the first virtual switch forwards the first packet according to the index field of the first memory block.

In this embodiment of the present invention, there are two cases in which the first virtual switch forwards the first packet: a case in which the first virtual switch forwards the first packet to a first virtual machine, and a case in which the first virtual switch forwards the first packet to a physical network interface card. Specifically, the first virtual switch obtains the first memory block in a physical network interface card receive queue, and forwards the first packet to the first virtual machine; or the first virtual switch obtains the first memory block in a send queue of the first virtual machine, and forwards the first packet to the physical network interface card receive queue.

The first virtual switch is configured to forward the first packet to the first virtual machine.

Specifically, if a virtual machine identified by the index field of the first memory block is the first virtual machine, the first virtual switch schedules a memory block from the first memory pool of the first virtual machine as a second memory block; the first virtual switch assigns address information of the first memory block to the second memory block; and the first virtual switch fills the second memory block into a receive queue of the first virtual machine.

If a virtual machine identified by the index field of the first memory block is not the first virtual machine, the first virtual switch schedules a memory block from the at least two second memory pools as a third memory block, where a virtual machine identified by an index field of the third memory block is the first virtual machine; the first virtual switch copies content of the first memory block to the third memory block; the first virtual switch schedules a memory block from the first memory pool of the first virtual machine as the second memory block; the first virtual switch assigns address information of the third memory block to the second memory block; and the first virtual switch fills the second memory block into the receive queue of the first virtual machine.

FIG. 8 is a schematic flowchart of a method for forwarding a packet to a first virtual machine by a first virtual switch according to an embodiment of the present invention.

As shown in FIG. 8, a process in which the first virtual switch forwards the packet to the first virtual machine specifically includes:
S110. Obtain a first packet in a first memory block in a physical network interface card receive queue.
S120. Determine whether a virtual machine identified by an index field of the first memory block is a first virtual machine.
S130. If the virtual machine identified by the index field of the first memory block is not the first virtual machine, schedule a memory block from a second memory pool corresponding to the first virtual machine as a third memory block, and copy content of the first memory block to the third memory block.
S140. If the virtual machine identified by the index field of the first memory block is the first virtual machine, take a memory block from a first memory pool of the first virtual machine as a second memory block.
S150. Assign a date_len value and a date_off field value that are in the first memory block or the third memory block to the second memory block.
S160. Put the second memory block into a receive queue of the first virtual machine.

In this embodiment of the present invention, the memory block for forwarding the packet is extracted from the second memory pool, and a data area of the second memory pool is not shared and includes head information. This can effectively prevent the head information of the memory block from being damaged by the virtual machine in a packet forwarding process, so as to improve system reliability.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

The first virtual switch is configured to forward the first packet to the physical network interface card receive queue.

Specifically, the first virtual switch obtains a fourth memory block from the at least two second memory pools, where a virtual machine identified by an index field of the fourth memory block is the first virtual machine; the first virtual switch assigns address information of the first memory block to the fourth memory block; and the first virtual switch fills the fourth memory block into the physical network interface card receive queue. The address information includes information about a data length field and information about a data starting position offset field.

FIG. 9 is a schematic flowchart of a method for forwarding a packet to a physical network interface card receive queue by a first virtual switch according to an embodiment of the present invention.

As shown in FIG. 9, a process in which the first virtual switch forwards the packet to the physical network interface card receive queue specifically includes:
S210. Obtain a first memory block in a send queue of a first virtual machine.
S220. Determine whether a memory block exists in the send queue of the first virtual machine.
S230. If a memory block exists in the send queue of the first virtual machine, take a fourth memory block from a second memory pool corresponding to the first virtual machine.
S240. Assign a date_len value and a date_off field value that are in the first memory block to the fourth memory block.
S250. Fill the fourth memory block into the physical network interface card receive queue.

In this embodiment of the present invention, the memory block for forwarding the packet is extracted from the second memory pool, and a data area of the second memory pool is not shared and includes head information. This can effectively prevent the head information of the memory block from being damaged by the virtual machine in a packet forwarding process, so as to improve system reliability.

In addition, a network packet stored in each shared memory area can be jointly accessed by a corresponding virtual machine and the physical host. This resolves a problem that packet content needs to be copied when the network packet is transmitted between the physical host and the virtual machine, thereby reducing CPU consumption and improving system forwarding performance.

The method disclosed in the foregoing embodiment of the present invention may be applied to a processor, or implemented by the processor. The processor may be an integrated circuit chip and has a signal processing capability. In an implementation process, the steps in the foregoing method may be implemented by using a hardware integrated logical circuit in the processor, or by using an instruction in a form of software.

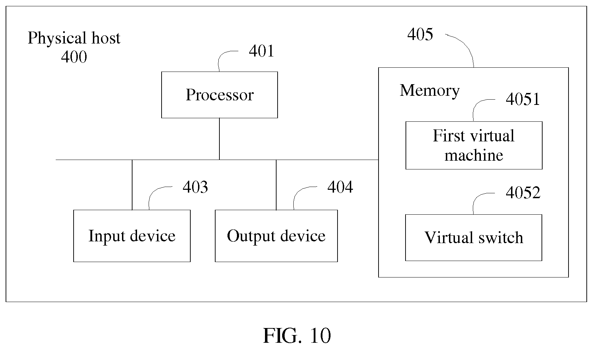

FIG. 10 is a schematic block diagram of a physical host 400 according to an embodiment of the present invention.

As shown in FIG. 10, the physical host provided in this embodiment of the present invention includes an input device 403 (optional), an output device 404 (optional), a processor 401, and a memory 405. In FIG. 10, the processor 401, the memory 405, and an interface communicate with each other and transmit a control and/or a data signal by using an internal connection channel.

The memory 405 may include a read-only memory and a random access memory, and provide an instruction and data for the processor 401. A part of the memory 405 may further include a nonvolatile random access memory (NVRAM). The memory 405 stores an executable module, a data structure, a subset of the executable module and the data structure, or an extended set of the executable module and the data structure, for example, an operation instruction, including various operation instructions used for implementing various operations; and for another example, an operating system, including various system programs used for implementing various basic services and processing a hardware-based task.

The processor 401 invokes the operation instruction stored in the memory 405 (the operation instruction may be stored in an operating system).

In this embodiment of the present invention, the processor 401 simulates, on the physical host 400, a first virtual switch 4052 and at least two virtual machines by invoking virtual machine software stored in the memory 405. Each virtual machine in the at least two virtual machines has a shared memory area that can be jointly accessed by the physical host, each shared memory area has a first memory pool, each first memory pool has at least one memory block, a memory block in each first memory pool has an index field that is used to identify a virtual machine to which the memory block belongs, and a first shared memory area corresponding to a first virtual machine 4051 in the at least two virtual machines is prohibited from being accessed by another virtual machine different from the first virtual machine 4501 in the at least two virtual machines; and the first virtual switch 4502 is configured to:
obtain a first memory block that stores a first packet, where the first memory block carries an index field that is used to identify a virtual machine to which the first memory block belongs; and forward the first packet according to the index field of the first memory block.

The memory block in each first memory pool includes a first memory segment and a second memory segment, the first memory segment is in front of the second memory segment, the first memory segment is configured to store address information of the second memory segment, and the second memory segment is configured to store a packet; and the physical host 400 has at least two second memory pools, each second memory pool in the at least two second memory pools is in a one-to-one correspondence with each first memory pool, and each second memory pool has a first memory segment in a corresponding first memory pool.

The first virtual switch 4502 is specifically configured to forward the first packet according to the at least two second memory pools and the index field of the first memory block.

The physical host 400 has a physical network interface card receive queue according to the at least two second memory pools, the first virtual machine 4501 has a send queue and/or a receive queue, and the receive queue or the send queue includes some or all memory blocks in a first memory pool of the first virtual machine 4501.

The first virtual switch 4502 is specifically configured to: obtain the first memory block in the physical network interface card receive queue, or obtain the first memory block in the send queue of the first virtual machine 4501.

The first virtual switch 4502 is configured to forward a packet to the first virtual machine 4501.

Specifically, if a virtual machine identified by the index field of the first memory block is the first virtual machine 4501, the first virtual switch 4502 is specifically configured to:
schedule a memory block from the first memory pool of the first virtual machine 4501 as a second memory block; assign address information of the first memory block to the second memory block; and fill the second memory block into the receive queue of the first virtual machine 4501.

If a virtual machine identified by the index field of the first memory block is not the first virtual machine 4501, the first virtual switch 4502 is specifically configured to:
schedule a memory block from the at least two second memory pools as a third memory block, where a virtual machine identified by an index field of the third memory block is the first virtual machine 4501; copy content of the first memory block to the third memory block; schedule a memory block from the first memory pool of the first virtual machine 4501 as the second memory block; assign address information of the third memory block to the second memory block; and fill the second memory block into the receive queue of the first virtual machine 4501.

The first virtual switch 4502 is configured to forward the first packet to the physical network interface card receive queue, where the first virtual switch 4502 is specifically configured to: obtain a fourth memory block from the at least two second memory pools, where a virtual machine identified by an index field of the fourth memory block is the first virtual machine 4501; assign address information of the first memory block to the fourth memory block; and fill the fourth memory block into the physical network interface card receive queue.

The address information includes information about a data length field and information about a data starting position offset field.

The physical host has a physical network interface card memory block queue, and the physical host is further configured to fill the physical network interface card memory block queue according to a memory block in the at least two second memory pools.

Before the physical host fills the physical network interface card memory block queue according to the memory block in the at least two second memory pools, the physical host is configured to: obtain traffic statistics information of each virtual machine in the at least two virtual machines; determine, according to the traffic statistics information, a traffic ratio between traffic of each virtual machine in the at least two virtual machines and total traffic of the at least two virtual machines; and determine a traffic ratio of the first virtual machine 4501 as a ratio between a quantity of memory blocks corresponding to the first virtual machine 4501 filled in the physical network interface card memory block queue and a total quantity of memory blocks filled in the physical network interface card memory block queue.

The physical host is further configured to generate the first shared memory area by configuring a metadata file for the first virtual machine 4501, and the metadata file includes port information of the first virtual machine 4501 and the first memory pool of the first virtual machine 4501.

It should be understood that FIG. 10 merely describes an example of the block diagram of the physical host according to this embodiment of the present invention. This embodiment of the present invention imposes no limitation. For example, a plurality of virtual machines, a plurality of virtual switches, and the like run on the physical host.

In an implementation process, the foregoing software modules may be located in a mature storage medium in the art, such as a random access memory, a flash memory, a read-only memory, a programmable read-only memory, an electrically erasable programmable memory, or a register. The storage medium is located in a memory, and a processor executes an instruction in the memory and completes the steps in the foregoing methods in combination with hardware of the processor. To avoid repetition, details are not described herein.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the embodiments of the present invention.

It may be clearly understood by a person skilled in the art that, for the purpose of convenient and brief description, for a detailed working process of the foregoing system, physical host, and unit, reference may be made to a corresponding process in the foregoing method embodiments, and details are not described herein again.

In the several embodiments provided in the present invention, it should be understood that the disclosed physical host and method may be implemented in other manners. For example, the described physical host embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the physical hosts or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the embodiments of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the embodiments of the present invention, but are not intended to limit the protection scope of the embodiments of the present invention. Any modification or replacement readily figured out by a person skilled in the art within the technical scope disclosed in the embodiments of the present invention shall fall within the protection scope of the embodiments of the present invention. Therefore, the protection scope of the embodiments of the present invention shall be subject to the protection scope of the claims.

## Claims

1. A packet forwarding method, wherein the method is applied to a physical host (400), and the physical host comprises a first virtual switch (4052) and at least two virtual machines (4051);
each virtual machine in the at least two virtual machines (4051) has a shared memory area that can be jointly accessed by the physical host (400), each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines, wherein the shared memory areas are isolated from each other; and
the method comprises:
obtaining, by the first virtual switch (4052), a first memory block that stores a first packet, wherein the first memory block carries an index field that is used to identify a virtual machine (4051) to which the first memory block belongs; and
forwarding, by the first virtual switch (4052), the first packet according to the index field of the first memory block.

2. The method according to claim 1, wherein
the memory block in each first memory pool comprises a first memory segment and a second memory segment, the first memory segment is in front of the second memory segment, the first memory segment is configured to store address information of the second memory segment, and the second memory segment is configured to store a packet;
the physical host (400) has at least two second memory pools, each second memory pool in the at least two second memory pools is in a one-to-one correspondence with each first memory pool, and each second memory pool has a first memory segment in a corresponding first memory pool; and
the forwarding, by the first virtual switch (4052), the first packet according to the index field of the first memory block comprises:
forwarding, by the first virtual switch (4052), the first packet according to the at least two second memory pools and the index field of the first memory block.

3. The method according to claim 2, wherein the physical host (400) has a physical network interface card receive queue according to the at least two second memory pools, the first virtual machine (4051) has a send queue and/or a receive queue, and the receive queue or the send queue of the first virtual machine comprises some or all memory blocks in a first memory pool of the first virtual machine; and
the obtaining, by the first virtual switch (4052), a first memory block that stores a first packet comprises:
obtaining, by the first virtual switch (4052), the first memory block in the physical network interface card receive queue; or
obtaining, by the first virtual switch (4052), the first memory block in the send queue of the first virtual machine (4051).

4. The method according to claim 3, wherein the first virtual switch (4052) is configured to forward a packet to the first virtual machine (4051); and
the forwarding, by the first virtual switch (4052), the first packet according to the at least two second memory pools and the index field of the first memory block comprises:
if a virtual machine (4051) identified by the index field of the first memory block is the first virtual machine, scheduling, by the first virtual switch (4052), a memory block from the first memory pool of the first virtual machine as a second memory block;
assigning, by the first virtual switch (4052), address information of the first memory block to the second memory block; and
filling, by the first virtual switch (4052), the second memory block into the receive queue of the first virtual machine (4051).

5. The method according to claim 3 or 4, wherein the first virtual switch (4052) is configured to forward a packet to the first virtual machine (4051); and
the forwarding, by the first virtual switch (4052), the first packet according to the at least two second memory pools and the index field of the first memory block comprises:
if a virtual machine (4051) identified by the index field of the first memory block is not the first virtual machine, scheduling, by the first virtual switch (4052), a memory block from the at least two second memory pools as a third memory block, wherein a virtual machine identified by an index field of the third memory block is the first virtual machine;
copying, by the first virtual switch (4052), content of the first memory block to the third memory block;
scheduling, by the first virtual switch (4052), a memory block from the first memory pool of the first virtual machine (4051) as the second memory block;
assigning, by the first virtual switch (4052), address information of the third memory block to the second memory block; and
filling, by the first virtual switch (4052), the second memory block into the receive queue of the first virtual machine (4051).

6. The method according to claim 3, wherein the first virtual switch (4052) is configured to forward the first packet to the physical network interface card receive queue; and the forwarding, by the first virtual switch (4052), the first packet according to the at least two second memory pools and the index field of the first memory block comprises:
obtaining, by the first virtual switch (4052), a fourth memory block from the at least two second memory pools, wherein a virtual machine (4051) identified by an index field of the fourth memory block is the first virtual machine;
assigning, by the first virtual switch (4052), address information of the first memory block to the fourth memory block; and
filling, by the first virtual switch (4052), the fourth memory block into the physical network interface card receive queue.

7. The method according to any one of claims 4 to 6, wherein the address information comprises information about a data length field and information about a data starting position offset field.

8. The method according to any one of claims 2 to 7, wherein the physical host (400) has a physical network interface card memory block queue, and the method further comprises:
filling, by the physical host (400), the physical network interface card memory block queue according to a memory block in the at least two second memory pools.

9. The method according to claim 8, wherein before the filling, by the physical host (400), the physical network interface card memory block queue according to a memory block in the at least two second memory pools, the method further comprises:
obtaining, by the physical host (400), traffic statistics information of each virtual machine in the at least two virtual machines (4051); and
determining, by the physical host (400) according to the traffic statistics information,
a traffic ratio between traffic of each virtual machine in the at least two virtual machines (4051) and total traffic of the at least two virtual machines; and
the filling, by the physical host (400), the physical network interface card memory block queue according to a memory block in the at least two second memory pools comprises:
determining, by the physical host (400), a traffic ratio of the first virtual machine (4051) as a ratio between a quantity of memory blocks corresponding to the first virtual machine filled in the physical network interface card memory block queue and a total quantity of memory blocks filled in the physical network interface card memory block queue.

10. The method according to any one of claims 1 to 9, wherein the physical host (400) generates the first shared memory area by configuring a metadata file for the first virtual machine (4051), and the metadata file comprises port information of the first virtual machine and the memory block in the first memory pool of the first virtual machine.

11. A physical host (400), wherein the physical host comprises a first virtual switch (4052) and at least two virtual machines (4051);
each virtual machine in the at least two virtual machines (4051) has a shared memory area that can be jointly accessed by the physical host (400), each shared memory area has a first memory pool, each first memory pool has at least one memory block, a memory block in each first memory pool has an index field that is used to identify a virtual machine to which the memory block belongs, and a first shared memory area corresponding to a first virtual machine in the at least two virtual machines is prohibited from being accessed by another virtual machine different from the first virtual machine in the at least two virtual machines, wherein the shared memory areas are isolated from each other; and
the first virtual switch (4052) is configured to:
obtain a first memory block that stores a first packet, wherein the first memory block carries an index field that is used to identify a virtual machine (4051) to which the first memory block belongs; and
forward the first packet according to the index field of the first memory block.

12. The physical host (400) according to claim 11, wherein
the memory block in each first memory pool comprises a first memory segment and a second memory segment, the first memory segment is in front of the second memory segment, the first memory segment is configured to store address information of the second memory segment, and the second memory segment is configured to store a packet;
the physical host (400) has at least two second memory pools, each second memory pool in the at least two second memory pools is in a one-to-one correspondence with each first memory pool, and each second memory pool has a first memory segment in a corresponding first memory pool; and
the first virtual switch (4052) is specifically configured to forward the first packet according to the at least two second memory pools and the index field of the first memory block.

13. The physical host (400) according to claim 12, wherein the physical host has a physical network interface card receive queue according to the at least two second memory pools, the first virtual machine (4051) has a send queue and/or a receive queue, and the receive queue or the send queue of the first virtual machine comprises some or all memory blocks in a first memory pool of the first virtual machine; and
the first virtual switch (4052) is specifically configured to: obtain the first memory block in the physical network interface card receive queue; or
obtain the first memory block in the send queue of the first virtual machine (4051).

14. The physical host (400) according to claim 13, wherein the first virtual switch (4052) is configured to forward a packet to the first virtual machine (4051);
if a virtual machine (4051) identified by the index field of the first memory block is the first virtual machine, the first virtual switch (4052) schedules a memory block from the first memory pool of the first virtual machine as a second memory block; and
the first virtual switch (4052) is configured to:
assign address information of the first memory block to the second memory block; and
fill the second memory block into the receive queue of the first virtual machine (4051).

15. The physical host (400) according to claim 13 or 14, wherein the first virtual switch (4052) is configured to forward a packet to the first virtual machine (4051);
if a virtual machine (4051) identified by the index field of the first memory block is not the first virtual machine, the first virtual switch (4052) schedules a memory block from the at least two second memory pools as a third memory block, wherein a virtual machine identified by an index field of the third memory block is the first virtual machine; and
the first virtual switch (4052) is configured to:
copy content of the first memory block to the third memory block;
schedule a memory block from the first memory pool of the first virtual machine (4051) as the second memory block;
assign address information of the third memory block to the second memory block; and
fill the second memory block into the receive queue of the first virtual machine (4051).

16. The physical host (400) according to claim 13, wherein the first virtual switch (4052) is configured to forward the first packet to the physical network interface card receive queue;
the first virtual switch (4052) is configured to obtain a fourth memory block from the at least two second memory pools, wherein a virtual machine (4051) identified by an index field of the fourth memory block is the first virtual machine; and
the first virtual switch (4052) is configured to:
assign address information of the first memory block to the fourth memory block; and
fill the fourth memory block into the physical network interface card receive queue.

17. The physical host (400) according to any one of claims 14 to 16, wherein the address information comprises information about a data length field and information about a data starting position offset field.

18. The physical host (400) according to any one of claims 12 to 17, wherein the physical host has a physical network interface card memory block queue, and the physical host is further configured to fill the physical network interface card memory block queue according to a memory block in the at least two second memory pools.

19. The physical host (400) according to claim 18, wherein before the physical host fills the physical network interface card memory block queue according to the memory block in the at least two second memory pools,
the physical host (400) is configured to:
obtain traffic statistics information of each virtual machine in the at least two virtual machines (4051);
determine, according to the traffic statistics information, a traffic ratio between traffic of each virtual machine in the at least two virtual machines (4051) and total traffic of the at least two virtual machines; and
determine a traffic ratio of the first virtual machine (4051) as a ratio between a quantity of memory blocks corresponding to the first virtual machine filled in the physical network interface card memory block queue and a total quantity of memory blocks filled in the physical network interface card memory block queue.

20. The physical host (400) according to any one of claims 11 to 19, wherein the physical host is further configured to generate the first shared memory area by configuring a metadata file for the first virtual machine (4051), and the metadata file comprises port information of the first virtual machine and the memory block in the first memory pool of the first virtual machine.

## Patentansprüche

1. Paketweiterleitungsverfahren, wobei das Verfahren in einem physischen Host (400) angewandt wird, und wobei der physische Host einen ersten virtuellen Schalter (4052) und mindestens zwei virtuelle Maschinen (4051) umfasst;
wobei jede virtuelle Maschine der mindestens zwei virtuellen Maschinen (4051) einen gemeinsam genutzten Speicherbereich aufweist, auf den durch den physischen Host (400) gemeinsam zugegriffen werden kann, wobei jeder gemeinsam genutzte Speicherbereich einen ersten Speicherpool aufweist, wobei jeder erste Speicherpool mindestens einen Speicherblock aufweist, wobei ein Speicherblock in jedem ersten Speicherpool ein Indexfeld aufweist, das verwendet wird, um eine virtuelle Maschine zu identifizieren, zu welcher der Speicherblock gehört, und wobei es verboten ist, dass auf einen ersten gemeinsam genutzten Speicherbereich, der einer ersten virtuellen Maschine der mindestens zwei virtuellen Maschinen entspricht, von einer anderen virtuellen Maschine aus zugegriffen wird, die verschieden ist von der ersten virtuellen Maschine der mindestens zwei virtuellen Maschinen, wobei die gemeinsam genutzten Speicherbereiche voneinander isoliert sind; und
wobei das Verfahren umfasst:
Erhalten, durch den ersten virtuellen Schalter (4052), eines ersten Speicherblocks, in dem ein erstes Paket gespeichert wird, wobei der erste Speicherblock ein Indexfeld trägt, das verwendet wird, um eine virtuelle Maschine (4051) zu identifizieren, zu welcher der erste Speicherblock gehört; und
Weiterleiten, durch den ersten virtuellen Schalter (4052), des ersten Pakets gemäß dem Indexfeld des ersten Speicherblocks.

2. Verfahren nach Anspruch 1, wobei:
der Speicherblock in jedem ersten Speicherpool ein erstes Speichersegment und ein zweites Speichersegment umfasst, wobei sich das erste Speichersegment vor dem zweiten Speichersegment befindet, wobei das erste Speichersegment konfiguriert ist zum Speichern von Adresseninformationen des zweiten Speichersegments und wobei das zweite Speichersegment konfiguriert ist zum Speichern eines Pakets;
der physische Host (400) mindestens zwei zweite Speicherpools aufweist, wobei jeder zweite Speicherpool der mindestens zwei zweiten Speicherpools in einer Eins-zu-Eins-Entsprechung mit jedem ersten Speicherpool steht, und wobei jeder zweite Speicherpool ein erstes Speichersegment in einem entsprechenden ersten Speicherpool aufweist; und
wobei das Weiterleiten, durch den ersten virtuellen Schalter (4052), des ersten Pakets gemäß dem Indexfeld des ersten Speicherblocks umfasst:
Weiterleiten, durch den ersten virtuellen Schalter (4052), des ersten Pakets gemäß den mindestens zwei zweiten Speicherpools und gemäß dem Indexfeld des ersten Speicherblocks.

3. Verfahren nach Anspruch 2, wobei der physische Host (400) eine Empfangswarteschlange einer physischen Netzwerkschnittstellenkarte gemäß den mindestens zwei zweiten Speicherpools aufweist, wobei die erste virtuelle Maschine (4051) eine Sendewarteschlange und/oder eine Empfangswarteschlange aufweist, und wobei die Empfangswarteschlange oder die Sendewarteschlange der ersten virtuellen Maschine einige oder alle Speicherblöcke in einem ersten Speicherpool der ersten virtuellen Maschine umfasst; und
wobei das Erhalten, durch den ersten virtuellen Schalter (4052), eines ersten Speicherblocks, in dem ein erstes Paket gespeichert wird, umfasst:
Erhalten, durch den ersten virtuellen Schalter (4052), des ersten Speicherblocks in der Empfangswarteschlange der physischen Netzwerkschnittstellenkarte; oder
Erhalten, durch den ersten virtuellen Schalter (4052), des ersten Speicherblocks in der Sendewarteschlange der ersten virtuellen Maschine (4051).

4. Verfahren nach Anspruch 3, wobei der erste virtuelle Schalter (4052) konfiguriert ist zum Weiterleiten eines Pakets der ersten virtuellen Maschine (4051); und
wobei das Weiterleiten, durch den ersten virtuellen Schalter (4052), des ersten Pakets gemäß den mindestens zwei zweiten Speicherpools und gemäß dem Indexfeld des ersten Speicherblocks umfasst:
wenn eine virtuelle Maschine (4051), die durch das Indexfeld des ersten Speicherblocks identifiziert wird, die erste virtuelle Maschine ist, Einplanen, durch den ersten virtuellen Schalter (4052), eines Speicherblocks aus dem ersten Speicherpool der ersten virtuellen Maschine als einen zweiten Speicherblock;
Zuweisen, durch den ersten virtuellen Schalter (4052), von Adresseninformationen des ersten Speicherblocks zu dem zweiten Speicherblock; und
Einfügen, durch den ersten virtuellen Schalter (4052), des zweiten Speicherblocks in die Empfangswarteschlange der ersten virtuellen Maschine (4051).

5. Verfahren nach Anspruch 3 oder 4, wobei der erste virtuelle Schalter (4052) konfiguriert ist zum Weiterleiten eines Pakets der ersten virtuellen Maschine (4051); und
wobei das Weiterleiten, durch den ersten virtuellen Schalter (4052), des ersten Pakets gemäß den mindestens zwei zweiten Speicherpools und gemäß dem Indexfeld des ersten Speicherblocks umfasst:
wenn eine virtuelle Maschine (4051), die durch das Indexfeld des ersten Speicherblocks identifiziert wird, nicht die erste virtuelle Maschine ist, Einplanen, durch den ersten virtuellen Schalter (4052), eines Speicherblocks aus den mindestens zwei zweiten Speicherpools als einen dritten Speicherblock, wobei eine virtuelle Maschine, die von einem Indexfeld des dritten Speicherblocks identifiziert wird, die erste virtuelle Maschine ist;
Kopieren, durch den ersten virtuellen Schalter (4052), eines Inhalts des ersten Speicherblocks in den dritten Speicherblock;
Einplanen, durch den ersten virtuellen Schalter (4052), eines Speicherblocks aus dem ersten Speicherpool der ersten virtuellen Maschine (4051) als den zweiten Speicherblock;
Zuweisen, durch den ersten virtuellen Schalter (4052), von Adresseninformationen des dritten Speicherblocks zu dem zweiten Speicherblock; und
Einfügen, durch den ersten virtuellen Schalter (4052), des zweiten Speicherblocks in die Empfangswarteschlange der ersten virtuellen Maschine (4051).

6. Verfahren nach Anspruch 3, wobei der erste virtuelle Schalter (4052) konfiguriert ist zum Weiterleiten des ersten Pakets zu der Empfangswarteschlange der physischen Netzwerkschnittstellenkarte; und
wobei das Weiterleiten, durch den ersten virtuellen Schalter (4052), des ersten Pakets gemäß den mindestens zwei zweiten Speicherpools und gemäß dem Indexfeld des ersten Speicherblocks umfasst:
Erhalten, durch den ersten virtuellen Schalter (4052), eines vierten Speicherblocks aus den mindestens zwei zweiten Speicherpools, wobei eine virtuelle Maschine (4051), die von einem Indexfeld des vierten Speicherblocks identifiziert wird, die erste virtuelle Maschine ist;
Zuweisen, durch den ersten virtuellen Schalter (4052), von Adresseninformationen des ersten Speicherblocks zu dem vierten Speicherblock; und
Einfügen, durch den ersten virtuellen Schalter (4052), des vierten Speicherblocks in die Empfangswarteschlange der physischen Netzwerkschnittstellenkarte.

7. Verfahren nach einem der Ansprüche 4 bis 6, wobei die Adressinformationen Informationen über ein Datenlängenfeld und Informationen über ein Feld eines Offsets einer Datenstartposition umfassen.

8. Verfahren nach einem der Ansprüche 2 bis 7, wobei der physische Host (400) eine Speicherblockwarteschlange einer physischen Netzwerkschnittstellenkarte aufweist und wobei das Verfahren außerdem umfasst:
Einfügen, durch den physischen Host (400), der Speicherblockwarteschlange der physischen Netzwerkschnittstellenkarte gemäß einem Speicherblock in die mindestens zwei zweiten Speicherpools.

9. Verfahren nach Anspruch 8, wobei das Verfahren vor dem Einfügen, durch den physischen Host (400), der Speicherblockwarteschlange der physischen Netzwerkschnittstellenkarte gemäß einem Speicherblock in die mindestens zwei zweiten Speicherpools außerdem umfasst:
Erhalten, in dem physischen Host (400), von Datenverkehrsstatistikinformationen von jeder virtuellen Maschine der mindestens zwei virtuellen Maschinen (4051); und
Ermitteln, durch den physischen Host (400) gemäß den Datenverkehrsstatistikinformationen, eines Datenverkehrsverhältnisses zwischen dem Datenverkehr von jeder virtuellen Maschine der mindestens zwei virtuellen Maschinen (4051) und einem Gesamtdatenverkehr der mindestens zwei virtuellen Maschinen; und wobei das Einfügen, durch den physischen Host (400), der Speicherblockwarteschlange der physischen Netzwerkschnittstellenkarte gemäß einem Speicherblock in die mindestens zwei zweiten Speicherpools umfasst:
Ermitteln, durch den physischen Host (400), eines Datenverkehrsverhältnisses der ersten virtuellen Maschine (4051) als ein Verhältnis zwischen einer Anzahl von Speicherblöcken, die der ersten virtuellen Maschine entsprechen, die in die Speicherblockwarteschlange der physischen Netzwerkschnittstellenkarte eingefügt wurden, und einer Gesamtanzahl von Speicherblöcken, die in die Speicherblockwarteschlange der physischen Netzwerkschnittstellenkarte eingefügt wurden.

10. Verfahren nach einem der Ansprüche 1 bis 9, wobei der physische Host (400) den ersten gemeinsam genutzten Speicherbereich erzeugt, indem eine Metadatendatei für die erste virtuelle Maschine (4051) konfiguriert wird, und wobei die Metadatendatei Anschlussinformationen der ersten virtuellen Maschine und des Speicherblocks in dem ersten Speicherpool der ersten virtuellen Maschine umfasst.

11. Physischer Host (400), wobei der physische Host einen ersten virtuellen Schalter (4052) und mindestens zwei virtuelle Maschinen (4051) umfasst;
wobei jede virtuelle Maschine der mindestens zwei virtuellen Maschinen (4051) einen gemeinsam genutzten Speicherbereich aufweist, auf den durch den physischen Host (400) gemeinsam zugegriffen werden kann, wobei jeder gemeinsam genutzte Speicherbereich einen ersten Speicherpool aufweist, wobei jeder erste Speicherpool mindestens einen Speicherblock aufweist, wobei ein Speicherblock in jedem ersten Speicherpool ein Indexfeld aufweist, das verwendet wird, um eine virtuelle Maschine zu identifizieren, zu welcher der Speicherblock gehört, und wobei es verboten ist, dass auf einen ersten gemeinsam genutzten Speicherbereich, der einer ersten virtuellen Maschine der mindestens zwei virtuellen Maschinen entspricht, von einer anderen virtuellen Maschine aus zugegriffen wird, die verschieden ist von der ersten virtuellen Maschine der mindestens zwei virtuellen Maschinen, wobei die gemeinsam genutzten Speicherbereiche voneinander isoliert sind; und
wobei der erste virtuelle Schalter (4052) konfiguriert ist zum:
Erhalten eines ersten Speicherblocks, in dem ein erstes Paket gespeichert wird, wobei der erste Speicherblock ein Indexfeld trägt, das verwendet wird, um eine virtuelle Maschine (4051) zu identifizieren, zu welcher der erste Speicherblock gehört; und
Weiterleiten des ersten Pakets gemäß dem Indexfeld des ersten Speicherblocks.

12. Physischer Host (400) nach Anspruch 11, wobei:
der Speicherblock in jedem ersten Speicherpool ein erstes Speichersegment und ein zweites Speichersegment umfasst, wobei sich das erste Speichersegment vor dem zweiten Speichersegment befindet, wobei das erste Speichersegment konfiguriert ist zum Speichern von Adresseninformationen des zweiten Speichersegments und wobei das zweite Speichersegment konfiguriert ist zum Speichern eines Pakets;
der physische Host (400) mindestens zwei zweite Speicherpools aufweist, wobei jeder zweite Speicherpool der mindestens zwei zweiten Speicherpools in einer Eins-zu-Eins-Entsprechung mit jedem ersten Speicherpool steht, und wobei jeder zweite Speicherpool ein erstes Speichersegment in einem entsprechenden ersten Speicherpool aufweist; und
wobei der erste virtuelle Schalter (4052) insbesondere konfiguriert ist zum Weiterleiten des ersten Pakets gemäß den mindestens zwei zweiten Speicherpools und gemäß dem Indexfeld des ersten Speicherblocks.

13. Physischer Host (400) nach Anspruch 12, wobei der physische Host eine Empfangswarteschlange einer physischen Netzwerkschnittstellenkarte gemäß den mindestens zwei zweiten Speicherpools aufweist, wobei die erste virtuelle Maschine (4051) eine Sendewarteschlange und/oder eine Empfangswarteschlange aufweist, und wobei die Empfangswarteschlange oder die Sendewarteschlange der ersten virtuellen Maschine einige oder alle Speicherblöcke in einem ersten Speicherpool der ersten virtuellen Maschine umfasst; und
wobei der erste virtuelle Schalter (4052) insbesondere konfiguriert ist zum:
Erhalten des ersten Speicherblocks in der Empfangswarteschlange der physischen Netzwerkschnittstellenkarte; oder
Erhalten des ersten Speicherblocks in der Sendewarteschlange der ersten virtuellen Maschine (4051).

14. Physischer Host (400) nach Anspruch 13, wobei der erste virtuelle Schalter (4052) konfiguriert ist zum Weiterleiten eines Pakets zu der ersten virtuellen Maschine (4051);
wenn eine virtuelle Maschine (4051), die durch das Indexfeld des ersten Speicherblocks identifiziert wird, die erste virtuelle Maschine ist, der erste virtuelle Schalter (4052) einen Speicherblock aus dem ersten Speicherpool der ersten virtuellen Maschine als einen zweiten Speicherblock einplant; und
wobei der erste virtuelle Schalter (4052) konfiguriert ist zum:
Zuweisen von Adresseninformationen des ersten Speicherblocks zu dem zweiten Speicherblock; und
Einfügen des zweiten Speicherblocks in die Empfangswarteschlange der ersten virtuellen Maschine (4051).

15. Physischer Host (400) nach Anspruch 13 oder 14, wobei der erste virtuelle Schalter (4052) konfiguriert ist zum Weiterleiten eines Pakets zu der ersten virtuellen Maschine (4051);
wenn eine virtuelle Maschine (4051), die durch das Indexfeld des ersten Speicherblocks identifiziert wird, nicht die erste virtuelle Maschine ist, der erste virtuelle Schalter (4052) einen Speicherblock aus den mindestens zwei zweiten Speicherpools als einen dritten Speicherblock einplant, wobei eine virtuelle Maschine, die von einem Indexfeld des dritten Speicherblocks identifiziert wird, die erste virtuelle Maschine ist; und
wobei der erste virtuelle Schalter (4052) konfiguriert ist zum:
Kopieren eines Inhalts des ersten Speicherblocks in den dritten Speicherblock;
Einplanen eines Speicherblocks aus dem ersten Speicherpool der ersten virtuellen Maschine (4051) als den zweiten Speicherblock;
Zuweisen von Adresseninformationen des dritten Speicherblocks zu dem zweiten Speicherblock; und
Einfügen des zweiten Speicherblocks in die Empfangswarteschlange der ersten virtuellen Maschine (4051).

16. Physischer Host (400) nach Anspruch 13, wobei der erste virtuelle Schalter (4052) konfiguriert ist zum Weiterleiten des ersten Pakets zu der Empfangswarteschlange der physischen Netzwerkschnittstellenkarte;
wobei der erste virtuelle Schalter (4052) konfiguriert ist zum Erhalten eines vierten Speicherblocks aus den mindestens zwei zweiten Speicherpools, wobei eine virtuelle Maschine (4051), die von einem Indexfeld des vierten Speicherblocks identifiziert wird, die erste virtuelle Maschine ist; und
wobei der erste virtuelle Schalter (4052) konfiguriert ist zum:
Zuweisen von Adresseninformationen des ersten Speicherblocks zu dem vierten Speicherblock; und
Einfügen des vierten Speicherblocks in die Empfangswarteschlange der physischen Netzwerkschnittstellenkarte.

17. Physischer Host (400) nach einem der Ansprüche 14 bis 16, wobei die Adressinformationen Informationen über ein Datenlängenfeld und Informationen über ein Feld eines Offsets einer Datenstartposition umfassen.

18. Physischer Host (400) nach einem der Ansprüche 12 bis 17, wobei der physische Host eine Speicherblockwarteschlange einer physischen Netzwerkschnittstellenkarte aufweist und wobei der physische Host außerdem konfiguriert ist zum Einfügen der Speicherblockwarteschlange der physischen Netzwerkschnittstellenkarte gemäß einem Speicherblock in die mindestens zwei zweiten Speicherpools.

19. Physischer Host (400) nach Anspruch 18, wobei der physische Host (400), bevor der physische Host die Speicherblockwarteschlange der physischen Netzwerkschnittstellenkarte gemäß dem Speicherblock in die mindestens zwei zweiten Speicherpools einfügt, konfiguriert ist zum:
Erhalten von Datenverkehrsstatistikinformationen von jeder virtuellen Maschine der mindestens zwei virtuellen Maschinen (4051);
Ermitteln, gemäß den Datenverkehrsstatistikinformationen, eines Datenverkehrsverhältnisses zwischen dem Datenverkehr von jeder virtuellen Maschine der mindestens zwei virtuellen Maschinen (4051) und einem Gesamtdatenverkehr der mindestens zwei virtuellen Maschinen; und
Ermitteln eines Datenverkehrsverhältnisses der ersten virtuellen Maschine (4051) als ein Verhältnis zwischen einer Anzahl von Speicherblöcken, die der ersten virtuellen Maschine entsprechen, die in die Speicherblockwarteschlange der physischen Netzwerkschnittstellenkarte eingefügt wurden, und einer Gesamtanzahl von Speicherblöcken, die in die Speicherblockwarteschlange der physischen Netzwerkschnittstellenkarte eingefügt wurden.

20. Physischer Host (400) nach einem der Ansprüche 11 bis 19, wobei der physische Host außerdem konfiguriert ist zum Erzeugen des ersten gemeinsam genutzten Speicherbereichs, indem eine Metadatendatei für die erste virtuelle Maschine (4051) konfiguriert wird, und wobei die Metadatendatei Anschlussinformationen der ersten virtuellen Maschine und des Speicherblocks in dem ersten Speicherpool der ersten virtuellen Maschine umfasst.

## Revendications

1. Procédé de transfert de paquets, le procédé étant appliqué à un hôte physique (400), et l'hôte physique comprenant un premier commutateur virtuel (4052) et au moins deux machines virtuelles (4051) ;
chaque machine virtuelle des au moins deux machines virtuelles (4051) comportant une zone de mémoire partagée qui est accessible conjointement par l'hôte physique (400), chaque zone de mémoire partagée comportant un premier pool de mémoire, chaque premier pool de mémoire comportant au moins un bloc de mémoire, un bloc de mémoire dans chaque premier pool de mémoire ayant un champ d'index qui est utilisé pour identifier une machine virtuelle à laquelle appartient le bloc de mémoire, et une première zone de mémoire partagée qui correspond à une première machine virtuelle des au moins deux machines virtuelles étant interdite d'accès par une autre machine virtuelle différente de la première machine virtuelle des au moins deux machines virtuelles, les zones de mémoire partagée étant isolées les unes des autres ; et
le procédé comprenant les étapes consistant à :
obtenir, par le premier commutateur virtuel (4052), un premier bloc de mémoire qui stocke un premier paquet, le premier bloc de mémoire transportant un champ d'index qui est utilisé pour identifier une machine virtuelle (4051) à laquelle appartient le premier bloc de mémoire ; et
transférer, par le premier commutateur virtuel (4052), le premier paquet selon le champ d'index du premier bloc de mémoire.

2. Procédé selon la revendication 1, dans lequel :
le bloc de mémoire dans chaque premier pool de mémoire comprend un premier segment de mémoire et un second segment de mémoire, le premier segment de mémoire est en face du second segment de mémoire, le premier segment de mémoire est configuré pour stocker des informations d'adresse du second segment de mémoire, et le second segment de mémoire est configuré pour stocker un paquet ;
l'hôte physique (400) comporte au moins deux seconds pools de mémoire, chaque second pool de mémoire des au moins deux seconds pools de mémoire est en correspondance biunivoque avec chaque premier pool de mémoire, et chaque second pool de mémoire comporte un premier segment de mémoire dans un premier pool de mémoire correspondant ; et
le transfert, par le premier commutateur virtuel (4052), du premier paquet selon le champ d'index du premier bloc de mémoire comprend l'étape consistant à :
transférer, par le premier commutateur virtuel (4052), le premier paquet selon les au moins deux seconds pools de mémoire et le champ d'index du premier bloc de mémoire.

3. Procédé selon la revendication 2, dans lequel l'hôte physique (400) comporte une file d'attente de réception de carte d'interface de réseau physique selon les au moins deux seconds pools de mémoire, la première machine virtuelle (4051) comporte une file d'attente d'envoi et/ou une file d'attente de réception, et la file d'attente de réception ou la file d'attente d'envoi de la première machine virtuelle comprend une partie ou la totalité des blocs de mémoire dans un premier pool de mémoire de la première machine virtuelle ; et
l'obtention, par le premier commutateur virtuel (4052), d'un premier bloc de mémoire qui stocke un premier paquet comprend l'étape consistant à :
obtenir, par le premier commutateur virtuel (4052), le premier bloc de mémoire dans la file d'attente de réception de carte d'interface de réseau physique ; ou
obtenir, par le premier commutateur virtuel (4052), le premier bloc de mémoire dans la file d'attente d'envoi de la première machine virtuelle (4051).

4. Procédé selon la revendication 3, dans lequel le premier commutateur virtuel (4052) est configuré pour transférer un paquet à la première machine virtuelle (4051) ; et
le transfert, par le premier commutateur virtuel (4052), du premier paquet selon les au moins deux seconds pools de mémoire et le champ d'index du premier bloc de mémoire comprend les étapes consistant à :
si une machine virtuelle (4051) identifiée par le champ d'index du premier bloc de mémoire est la première machine virtuelle, ordonnancer, par le premier commutateur virtuel (4052), un bloc de mémoire du premier pool de mémoire de la première machine virtuelle comme deuxième bloc de mémoire ;
attribuer, par le premier commutateur virtuel (4052), des informations d'adresse du premier bloc de mémoire au deuxième bloc de mémoire ; et
remplir, par le premier commutateur virtuel (4052), la file d'attente de réception de la première machine virtuelle (4051) avec le deuxième bloc de mémoire.

5. Procédé selon la revendication 3 ou 4, dans lequel le premier commutateur virtuel (4052) est configuré pour transférer un paquet à la première machine virtuelle (4051) ; et
le transfert, par le premier commutateur virtuel (4052), du premier paquet selon les au moins deux seconds pools de mémoire et le champ d'index du premier bloc de mémoire comprend les étapes consistant à :
si une machine virtuelle (4051) identifiée par le champ d'index du premier bloc de mémoire n'est pas la première machine virtuelle, ordonnancer, par le premier commutateur virtuel (4052), un bloc de mémoire des au moins deux seconds pools de mémoire comme un troisième bloc de mémoire, une machine virtuelle identifiée par un champ d'index du troisième bloc de mémoire étant la première machine virtuelle ;
copier, par le premier commutateur virtuel (4052), un contenu du premier bloc de mémoire dans le troisième bloc de mémoire ;
ordonnancer, par le premier commutateur virtuel (4052), un bloc de mémoire du premier pool de mémoire de la première machine virtuelle (4051) comme deuxième bloc de mémoire ;
attribuer, par le premier commutateur virtuel (4052), des informations d'adresse du troisième bloc de mémoire au deuxième bloc de mémoire ; et
remplir, par le premier commutateur virtuel (4052), la file d'attente de réception de la première machine virtuelle (4051) avec le deuxième bloc de mémoire.

6. Procédé selon la revendication 3, dans lequel le premier commutateur virtuel (4052) est configuré pour transférer le premier paquet à la file d'attente de réception de carte d'interface de réseau physique ; et
le transfert, par le premier commutateur virtuel (4052), du premier paquet selon les au moins deux seconds pools de mémoire et le champ d'index du premier bloc de mémoire comprend les étapes consistant à :
obtenir, par le premier commutateur virtuel (4052), un quatrième bloc de mémoire des au moins deux seconds pools de mémoire, une machine virtuelle (4051) identifiée par un champ d'index du quatrième bloc de mémoire étant la première machine virtuelle ;
attribuer, par le premier commutateur virtuel (4052), des informations d'adresse du premier bloc de mémoire au quatrième bloc de mémoire ; et
remplir, par le premier commutateur virtuel (4052), la file d'attente de réception de carte d'interface de réseau physique avec le quatrième bloc de mémoire.

7. Procédé selon l'une quelconque des revendications 4 à 6, dans lequel les informations d'adresse comprennent des informations concernant un champ de longueur de données et des informations concernant un champ de décalage de position de début de données.

8. Procédé selon l'une quelconque des revendications 2 à 7, dans lequel l'hôte physique (400) comporte une file d'attente de blocs de mémoire de carte d'interface de réseau physique, et le procédé comprenant en outre l'étape consistant à :
remplir, par l'hôte physique (400), la file d'attente de blocs de mémoire de carte d'interface de réseau physique selon un bloc de mémoire des au moins deux seconds pools de mémoire.

9. Procédé selon la revendication 8, le procédé comprenant en outre, avant le remplissage, par l'hôte physique (400), de la file d'attente de blocs de mémoire de carte d'interface de réseau physique selon un bloc de mémoire des au moins deux seconds pools de mémoire, les étapes consistant à :
obtenir, par l'hôte physique (400), des informations de statistiques de trafic de chaque machine virtuelle des au moins deux machines virtuelles (4051) ; et
déterminer, par l'hôte physique (400) selon les informations de statistiques de trafic, un rapport de trafic entre un trafic de chaque machine virtuelle des au moins deux machines virtuelles (4051) et un trafic total des au moins deux machines virtuelles ; et
le remplissage, par l'hôte physique (400), de la file d'attente de blocs de mémoire de carte d'interface de réseau physique selon un bloc de mémoire des au moins deux seconds pools de mémoire comprenant l'étape consistant à :
déterminer, par l'hôte physique (400), un rapport de trafic de la première machine virtuelle (4051) comme un rapport entre un nombre de blocs de mémoire correspondant à la première machine virtuelle remplis dans la file d'attente de blocs de mémoire de carte d'interface de réseau physique et un nombre total de blocs de mémoire remplis dans la file d'attente de blocs de mémoire de carte d'interface de réseau physique.

10. Procédé selon l'une quelconque des revendications 1 à 9, dans lequel l'hôte physique (400) génère la première zone de mémoire partagée en configurant un fichier de métadonnées pour la première machine virtuelle (4051), et le fichier de métadonnées comprend des informations de port de la première machine virtuelle et le bloc de mémoire dans le premier pool de mémoire de la première machine virtuelle.

11. Hôte physique (400), l'hôte physique comprenant un premier commutateur virtuel (4052) et au moins deux machines virtuelles (4051) ;
chaque machine virtuelle des au moins deux machines virtuelles (4051) comportant une zone de mémoire partagée qui est accessible conjointement par l'hôte physique (400), chaque zone de mémoire partagée comportant un premier pool de mémoire, chaque premier pool de mémoire comportant au moins un bloc de mémoire, un bloc de mémoire dans chaque premier pool de mémoire ayant un champ d'index qui est utilisé pour identifier une machine virtuelle à laquelle appartient le bloc de mémoire, et une première zone de mémoire partagée qui correspond à une première machine virtuelle des au moins deux machines virtuelles étant interdite d'accès par une autre machine virtuelle différente de la première machine virtuelle des au moins deux machines virtuelles, les zones de mémoire partagée étant isolées les unes des autres ; et
le premier commutateur virtuel (4052) étant configuré pour :
obtenir un premier bloc de mémoire qui stocke un premier paquet, le premier bloc de mémoire transportant un champ d'index qui est utilisé pour identifier une machine virtuelle (4051) à laquelle appartient le premier bloc de mémoire ; et
transférer le premier paquet selon le champ d'index du premier bloc de mémoire.

12. Hôte physique (400) selon la revendication 11, dans lequel :
le bloc de mémoire dans chaque premier pool de mémoire comprend un premier segment de mémoire et un second segment de mémoire, le premier segment de mémoire est en face du second segment de mémoire, le premier segment de mémoire est configuré pour stocker des informations d'adresse du second segment de mémoire, et le second segment de mémoire est configuré pour stocker un paquet ;
l'hôte physique (400) comporte au moins deux seconds pools de mémoire, chaque second pool de mémoire des au moins deux seconds pools de mémoire est en correspondance biunivoque avec chaque premier pool de mémoire, et chaque second pool de mémoire comporte un premier segment de mémoire dans un premier pool de mémoire correspondant ; et
le premier commutateur virtuel (4052) est spécifiquement configuré pour transférer le premier paquet selon les au moins deux seconds pools de mémoire et le champ d'index du premier bloc de mémoire.

13. Hôte physique (400) selon la revendication 12, l'hôte physique comportant une file d'attente de réception de carte d'interface de réseau physique selon les au moins deux seconds pools de mémoire, la première machine virtuelle (4051) comportant une file d'attente d'envoi et/ou une file d'attente de réception, et la file d'attente de réception ou la file d'attente d'envoi de la première machine virtuelle comprenant une partie ou la totalité des blocs de mémoire dans un premier pool de mémoire de la première machine virtuelle ; et
le premier commutateur virtuel (4052) étant spécifiquement configuré pour : obtenir le premier bloc de mémoire dans la file d'attente de réception de carte d'interface de réseau physique ; ou
obtenir le premier bloc de mémoire dans la file d'attente d'envoi de la première machine virtuelle (4051).

14. Hôte physique (400) selon la revendication 13, dans lequel le premier commutateur virtuel (4052) est configuré pour transférer un paquet à la première machine virtuelle (4051) ;
si une machine virtuelle (4051) identifiée par le champ d'index du premier bloc de mémoire est la première machine virtuelle, le premier commutateur virtuel (4052) ordonnance un bloc de mémoire du premier pool de mémoire de la première machine virtuelle comme deuxième bloc de mémoire ; et
le premier commutateur virtuel (4052) est configuré pour :
attribuer des informations d'adresse du premier bloc de mémoire au deuxième bloc de mémoire ; et
remplir la file d'attente de réception de la première machine virtuelle (4051) avec le deuxième bloc de mémoire.

15. Hôte physique (400) selon la revendication 13 ou 14, dans lequel le premier commutateur virtuel (4052) est configuré pour transférer un paquet à la première machine virtuelle (4051) ;
si une machine virtuelle (4051) identifiée par le champ d'index du premier bloc de mémoire n'est pas la première machine virtuelle, le premier commutateur virtuel (4052) ordonnance un bloc de mémoire des au moins deux seconds pools de mémoire comme un troisième bloc de mémoire, une machine virtuelle identifiée par un champ d'index du troisième bloc de mémoire étant la première machine virtuelle ; et
le premier commutateur virtuel (4052) est configuré pour :
copier un contenu du premier bloc de mémoire dans le troisième bloc de mémoire ;
ordonnancer un bloc de mémoire du premier pool de mémoire de la première machine virtuelle (4051) comme deuxième bloc de mémoire ;
attribuer des informations d'adresse du troisième bloc de mémoire au deuxième bloc de mémoire ; et
remplir la file d'attente de réception de la première machine virtuelle (4051) avec le deuxième bloc de mémoire.

16. Hôte physique (400) selon la revendication 13, dans lequel le premier commutateur virtuel (4052) est configuré pour transférer le premier paquet à la file d'attente de réception de carte d'interface de réseau physique ;
le premier commutateur virtuel (4052) est configuré pour obtenir un quatrième bloc de mémoire des au moins deux seconds pools de mémoire, une machine virtuelle (4051) identifiée par un champ d'index du quatrième bloc de mémoire étant la première machine virtuelle ; et
le premier commutateur virtuel (4052) est configuré pour :
attribuer des informations d'adresse du premier bloc de mémoire au quatrième bloc de mémoire ; et remplir la file d'attente de réception de carte d'interface de réseau physique avec le quatrième bloc de mémoire.

17. Hôte physique (400) selon l'une quelconque des revendications 14 à 16, dans lequel les informations d'adresse comprennent des informations concernant un champ de longueur de données et des informations concernant un champ de décalage de position de début de données.

18. Hôte physique (400) selon l'une quelconque des revendications 12 à 17, l'hôte physique comportant une file d'attente de blocs de mémoire de carte d'interface de réseau physique, et l'hôte physique étant en outre configuré pour remplir la file d'attente de blocs de mémoire de carte d'interface de réseau physique selon un bloc de mémoire des au moins deux seconds pools de mémoire.

19. Hôte physique (400) selon la revendication 18, l'hôte physique (400) étant configuré, avant que l'hôte physique ne remplisse la file d'attente de blocs de mémoire de carte d'interface de réseau physique selon le bloc de mémoire des au moins deux seconds pools de mémoire, pour :
obtenir des informations de statistiques de trafic de chaque machine virtuelle des au moins deux machines virtuelles (4051) ;
déterminer, selon les informations de statistiques de trafic, un rapport de trafic entre un trafic de chaque machine virtuelle des au moins deux machines virtuelles (4051) et un trafic total des au moins deux machines virtuelles ; et
déterminer un rapport de trafic de la première machine virtuelle (4051) comme un rapport entre un nombre de blocs de mémoire correspondant à la première machine virtuelle remplis dans la file d'attente de blocs de mémoire de carte d'interface de réseau physique et un nombre total de blocs de mémoire remplis dans la file d'attente de blocs de mémoire de carte d'interface de réseau physique.

20. Hôte physique (400) selon l'une quelconque des revendications 11 à 19, l'hôte physique étant en outre configuré pour générer la première zone de mémoire partagée en configurant un fichier de métadonnées pour la première machine virtuelle (4051), et le fichier de métadonnées comprenant des informations de port de la première machine virtuelle et le bloc de mémoire dans le premier pool de mémoire de la première machine virtuelle.
